# EUROPEAN PATENT APPLICATION

(11) **EP 4 819 657 A1**
(43) Date of publication of application: **07.10.2026**
(21) Application number: 24902591.7
(22) Date of filing: 29.11.2024
(51) Int. Cl.: H04W 12/06

(54) **COMMUNICATION METHOD, AND APPARATUS**

(30) Priority: 15.12.2023 CN 202311733106
(71) Applicant: Huawei Technologies Co., Ltd., Shenzhen, Guangdong 518129 (CN)
(72) Inventor: XU, Yishan, Shenzhen, Guangdong 518129 (CN); GUO, Longhua, Shenzhen, Guangdong 518129 (CN); HU, Li, Shenzhen, Guangdong 518129 (CN)
(74) Representative: Gill Jennings & Every LLP
(86) International application number: PCT/CN2024/135718
(87) International publication number: WO 2025/124169

(57) **Abstract**

A communication method and apparatus are provided. The communication method includes: A mobility management device obtains a first message, where the first message includes identification information of a terminal device, the first message indicates a device type of the terminal device, and the terminal device accesses a network by using an internet of things access technology; the mobility management device discovers an authentication service device based on the first message, where the authentication service device supports authorization and/or authentication on the terminal device that accesses the network by using the internet of things access technology; and the mobility management device sends a first authentication request message to the authentication service device, where the first authentication request message includes the identification information of the terminal device, and the first authentication request message is used to request to perform authorization and/or authentication on the terminal device. According to the solutions of this application, a core network can perform optimization and adaptation for network function selection in an access procedure of an internet of things terminal, so that a core network device can select a proper network function to perform a security procedure based on a service request or a feature and a capability of the internet of things terminal.

## Description

This application claims priority to Chinese Patent Application No. 202311733106.8, filed with the China National Intellectual Property Administration on December 15, 2023 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

**In** the field of the internet of things, an ambient energy internet of things is a new emerging technology field that has attracted much attention. The ambient energy internet of things is an internet of things terminal without a power supply or without a built-in battery. These terminals extract energy from the environment to meet working requirements of the terminals.

Because the internet of things terminal is a terminal device with low power consumption and low complexity, an authentication procedure, an authentication algorithm, and the like of the internet of things terminal may not be consistent with those of a common 3GPP user equipment, and a lightweight security authentication algorithm/procedure may be used to perform a security procedure of the terminal type. However, not all network elements that perform security authentication on the network support a new algorithm or procedure.

Therefore, how to select a proper network element to perform a security authentication procedure for an internet of things terminal is an urgent problem to be resolved.

### SUMMARY

This application provides a communication method and apparatus. Capability information, service requester information, device type information, or the like corresponding to an ambient internet of things device is newly added to network element selection and network element configuration information, so that a core network device can select a proper network element based on a service request or a feature and a capability of an internet of things terminal to perform a security procedure. This avoids a failure of accessing a network by a terminal device due to authentication failure.

According to a first aspect, a communication method is provided. The method includes: A mobility management device obtains a first message, where the first message includes identification information of a terminal device, the first message indicates a device type of the terminal device, and the terminal device accesses a network by using an internet of things access technology; the mobility management device selects an authentication service device based on the first message, where the authentication service device supports authorization and/or authentication on the terminal device that accesses the network by using the internet of things access technology; and the mobility management device sends a first authentication request message to the authentication service device, where the first authentication request message includes the identification information of the terminal device, and the first authentication request message is used to request to perform authorization and/or authentication on the terminal device.

The mobility management device, for example, an AMF network element, is instructed that the terminal device is an ambient internet of things device, so that the AMF can select a network element that can support performing of a security authentication procedure or algorithm on the internet of things device for authentication and authorization.

According to the solution of this application, device type information of the ambient internet of things device is added, so that a core network can perform optimization and adaptation for network function selection in an access procedure of an internet of things terminal, so that a core network device can select a proper network function to perform a security procedure based on a service request or a feature and a capability of the internet of things terminal.

In this application, the internet of things may be an ambient internet of things, a power-enabled internet of things, an ambient power-enabled internet of things, or a passive internet of things.

In this application, a device that accesses a network by using an internet of things access technology may be a device in the ambient internet of things, the power-enabled internet of things, the ambient power-enabled internet of things, or the passive internet of things.

With reference to the first aspect, in some implementations of the first aspect, the first message includes device type information and/or indication information, the device type information indicates that the terminal device is an active terminal or a passive terminal, the indication information indicates that the terminal device is an internet of things device, and that the mobility management device determines that the terminal device is an internet of things device based on the first message, and the mobility management device selects the authentication service device based on the first message includes: The mobility management device determines, based on the first message, that the terminal device is an internet of things device, and selects the authentication service device that supports authorization and/or authentication on the internet of things device.

In a possible implementation, the indication information indicates that the terminal device accesses the network by using the internet of things access technology.

The device type information may further indicate that the terminal device is the active terminal or the passive terminal. The indication information may be from a reader/writer device. The reader/writer device determines, based on a device identifier sent by the terminal device, that the terminal device is the internet of things device, and directly sends the indication information to the mobility management device.

With reference to the first aspect, in some implementations of the first aspect, the mobility management device sends a first request message to a network repository device based on the first message, where the first request message is used to request to discover the authentication service device, and the first request message includes at least one of the following: a group identifier, the indication information, and the device type information, where the group identifier indicates a service requester corresponding to the terminal device, the indication information indicates that the terminal device is the internet of things device, and the device type information indicates that the terminal device is the active terminal or the passive terminal; the mobility management device obtains first response information from the network repository device, where the first response information includes identification information and/or address information of the authentication service device; and the mobility management device selects the authentication service device based on the first response information.

With reference to the first aspect, in some implementations of the first aspect, the first response information is determined based on the first request message and first configuration information of the authentication service device, where the first configuration information includes at least one of the following: a first support group identifier, first support information, and first support type information, the first support group identifier corresponds to the first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication.

In a possible implementation, the first support information indicates that authorization and/or authentication on the internet of things device is supported.

In this application, there may be a plurality of implementations in which the group identifier indicates the service requester. For example, the group identifier may be an identifier of the service requester. For another example, there may be a correspondence between the group identifier and the identifier of the service requester. There may be a plurality of implementations in which the first support group identifier indicates the first service requester. For example, the first support group identifier may be an identifier of the first service requester. For another example, there may be a correspondence between the first support group identifier and the identifier of the first service requester, and the authentication service device supports authorization and/or authentication on the terminal device corresponding to the first service requester.

When registering with a network repository device, for example, an NRF network element, the authentication service device, for example, an AUSF network element, may report a capability of supporting authorization of the internet of things device (or further report a capability of supporting authorization of an active device or a passive device) and/or a supported device identifier range (for example, a supported field used to indicate a service requester). Therefore, the mobility management device may dynamically discover, by using the network repository device, the authentication service device that can support the authorization and/or authentication procedure of the terminal device.

According to the solution of this application, the core network device may select the AUSF network element based on an NRF discovery mechanism, so that the selected AUSF supports performing a security procedure on the internet of things terminal, thereby avoiding a case in which the selected AUSF does not support the security procedure of the terminal, and consequently authentication fails and the terminal cannot access the network.

With reference to the first aspect, in some implementations of the first aspect, the mobility management device sends a second request message to a network repository device, where the second request message is used to request to discover a unified data management device, and the second request message includes at least one of the following: identification information, a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal; the mobility management device obtains second response information from the network repository device, where the second response information includes identification information and/or address information of the unified data management device; and the mobility management device selects the unified data management device based on the second response information.

With reference to the first aspect, in some implementations of the first aspect, the second response information is determined based on second request information and second configuration information of the unified data management device, where the second configuration information includes at least one of the following: a second support group identifier, second support information, and second support type information, the second support group identifier indicates that the second service requester is supported, the unified data management device supports management of subscription data of a terminal device corresponding to the second service requester, the second support information indicates whether management of subscription data of an internet of things device is supported, and the second support type information indicates a device type corresponding to the terminal device that is supported by the unified data management device and that manages the subscription data.

In a possible implementation, the second support information indicates that the subscription data of the internet of things device is supported.

There may be a plurality of implementations in which the second support group identifier indicates the second service requester. For example, the second support group identifier may be an identifier of the second service requester. For another example, there may be a correspondence between the second support group identifier and the identifier of the second service requester, and the unified data management device supports management of subscription data of a terminal device corresponding to the second service requester.

When registering with a network repository device, for example, an NRF network element, the unified data management device, for example, a UDM network element, may report a capability of supporting management of subscription data of the internet of things device (or further report a capability of supporting authorization of an active device or a passive device) and/or a supported device identifier range (for example, a supported field used to indicate a service requester). Therefore, the mobility management device may dynamically discover, by using the network repository device, the unified data management device that can manage the subscription data of the terminal device.

According to the solution of this application, the core network device may select the UDM network element based on an NRF discovery mechanism, so that the selected UDM supports performing a security procedure on the internet of things terminal, thereby avoiding a case in which the selected UDM does not support the security procedure of the terminal, and consequently authentication fails and the terminal cannot access the network.

With reference to the first aspect, in some implementations of the first aspect, the mobility management device selects the authentication service device based on the first message and third configuration information, where the third configuration information includes a correspondence between authentication service device information and at least one of the following: a first support group identifier, first support information, and first support type information, where the authentication service device information includes an identifier and/or address information of the authentication service device. The first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication.

The mobility management device, for example, the AMF network element, may locally configure information about an authentication service device, for example, an AUSF network element, that supports an authorization and/or authentication procedure of the internet of things terminal device, and the information may include a supported group identifier, a supported device type (the active terminal and/or the passive terminal), and the like.

According to the solution of this application, information used to select a network element is configured on the mobility management device such as the AMF network element, so that the mobility management device selects another core network device that supports the security procedure of the internet of things terminal. In this way, the network elements do not need to dynamically execute a request by using an NRF, thereby reducing signaling overheads.

With reference to the first aspect, in some implementations of the first aspect, the mobility management device sends a third request message to a unified data management device, where the third request message is used to select the authentication service device, and the third request message includes at least one of the following: identification information, a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal; the mobility management device obtains third response information from the unified data management device, where the third response information includes identification information and/or address information of the authentication service device; and the mobility management device selects the authentication service device based on the first response information.

With reference to the first aspect, in some implementations of the first aspect, the third response information is determined based on the third request information and fourth configuration information, where the fourth configuration information includes a correspondence between authentication service device information and at least one of the following: a first support group identifier, first support information, and first support type information. The first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication.

The unified data management device, for example, the UDM network element, may locally configure information about an authentication service device, for example, an AUSF network element, that supports an authorization and/or authentication procedure of the internet of things terminal device, and the information may include a supported group identifier, a supported device type (the active terminal and/or the passive terminal), and the like.

According to the solution of this application, information used to select a network element is configured on the unified data management device such as the UDM network element, so that the mobility management device selects, by using the unified data management device, a core network device that supports the security procedure of the internet of things terminal. In this way, the network elements do not need to dynamically execute a request by using an NRF, thereby reducing signaling overheads.

With reference to the first aspect, in some implementations of the first aspect, the mobility management device selects the unified data management device based on the first message and the third configuration information, where the third configuration information includes a correspondence between unified data management device information and at least one of the following: a second support group identifier, second support information, and second support type information, the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

The mobility management device, for example, the AMF network element, may locally configure information about a unified data management device, for example, a UDM network element, that supports an authorization and/or authentication procedure of the internet of things terminal device, and the information may include a supported group identifier, a supported device type (the active terminal and/or the passive terminal), and the like.

According to the solution of this application, information used to select a network element is configured on the mobility management device such as the AMF network element, so that the mobility management device selects another core network device that supports the security procedure of the internet of things terminal. In this way, the network elements do not need to dynamically execute a request by using an NRF, thereby reducing signaling overheads.

With reference to the first aspect, in some implementations of the first aspect, the mobility management device sends a registration request message to the unified data management device, where the registration request message includes identification information of the mobility management device and the identification information and/or the address information of the authentication service device, and the registration request message indicates the mobility management device and the authentication service device that serve the terminal device.

With reference to the first aspect, in some implementations of the first aspect, the mobility management device stores the identification information of the authentication service device and/or the identification information of the unified data management device.

According to the solution of this application, the mobility management device may provide information about the authentication service device during registration, so that the unified data management device stores the information about the authentication service device that supports the security procedure of the internet of things terminal. Therefore, when there is mobility subsequently, a new mobility management device may obtain, by using the information stored in the unified data management device, the information about the authentication service device that supports the security procedure, thereby reducing signaling overheads.

With reference to the first aspect, in some implementations of the first aspect, the mobility management device obtains a sixth request message from a network exposure function, where the sixth request message includes network function information, and the network function information includes identification information and/or address information of at least one of the following devices: the authentication service device, a unified data management device, a network slice specific authentication and authorization function NSAAF, and an AAA server; and the mobility management device selects the authentication service device and/or the unified data management device based on the first message and the sixth request message.

When the AAA server performs the security procedure, the mobility management device discovers an address of the AAA server by using a network exposure function, for example, an NEF network element.

According to a second aspect, a communication method is provided. The method includes: An authentication service device receives a first authentication request message from a mobility management device, where the first authentication request message includes identification information of a terminal device, the first authentication request message is used to request to perform authorization and/or authentication on the terminal device, and the terminal device accesses a network by using an internet of things access technology.

With reference to the second aspect, in some implementations of the second aspect, the first authentication request message includes device type information and/or indication information, the device type information indicates that the terminal device is an active terminal or a passive terminal, the indication information indicates that the terminal device is an internet of things device, and the method further includes: The authentication service device determines the terminal device as the internet of things device based on the first authentication request message.

With reference to the second aspect, in some implementations of the second aspect, the authentication service device selects a unified data management device based on the first authentication request message, where the unified data management device supports authorization and/or authentication on a device that accesses the network by using the internet of things access technology; and the authentication service device sends a second authentication request message to the unified data management device, where the second authentication request message is used to determine an authentication method, and the authentication method is used to perform authorization and/or authentication on the terminal device.

With reference to the second aspect, in some implementations of the second aspect, the first authentication request message includes the terminal device type information and/or the indication information, where the device type information indicates that the terminal device is the active terminal or the passive terminal, and the indication information indicates that the terminal device is the internet of things device. The second authentication request message includes at least one of the following: identification information, a group identifier, indication information, and device type information, where the group identifier is included in the identification information, and the group identifier indicates a service requester corresponding to the terminal device.

With reference to the second aspect, in some implementations of the second aspect, the authentication service device sends first configuration information to a network repository device, where the first configuration information includes at least one of the following: a first support group identifier, first support information, and first support type information. The first support group identifier corresponds to a first service requester, the authentication service device supports performing authorization and/or authentication on a terminal device corresponding to the first service requester, the first support information indicates whether the authentication service device supports authorization and/or authentication on the internet of things device, and the first support type information indicates a device type for which the authentication service device supports authorization and/or authentication.

When registering with a network repository device, for example, an NRF network element, the authentication service device, for example, an AUSF network element, may report a capability of supporting authorization of the internet of things device (or further report a capability of supporting authorization of an active device or a passive device) and/or a supported device identifier range (for example, a supported field used to indicate a service requester). Therefore, another device may dynamically discover, by using the network repository device, the authentication service device that can support the authorization and/or authentication procedure of the terminal device.

With reference to the second aspect, in some implementations of the second aspect, the authentication service device sends a fourth request message to a network repository device based on the first authentication request message, where the fourth request message is used to request to discover the unified data management device, and the fourth request message includes at least one of the following: a group identifier, indication information, and device type information, where the group identifier indicates the service requester corresponding to the terminal device, the indication information indicates that the terminal device is the internet of things device, and the device type information indicates that the terminal device is the active terminal or the passive terminal; the authentication service device obtains fourth response information from the network repository device, where the fourth response information includes identification information and/or address information of the unified data device; and the authentication service device selects the unified data management device based on the fourth response information.

With reference to the second aspect, in some implementations of the second aspect, the fourth response information is determined based on the fourth request message and second configuration information of the unified data management device, where the second configuration information includes at least one of the following: a second support group identifier, second support information, and second support type information. The second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

When registering with a network repository device, for example, an NRF network element, the unified data management device, for example, a UDM network element, may report a capability of supporting management of subscription data of the internet of things device (or further report a capability of supporting authorization of an active device or a passive device) and/or a supported device identifier range (for example, a supported field used to indicate a service requester). Therefore, the authentication service device may dynamically discover, by using the network repository device, the unified data management device that can support management of the subscription data of the terminal device.

With reference to the second aspect, in some implementations of the second aspect, the authentication service device selects the unified data management device based on the first authentication information and fifth configuration information, where the fifth configuration information includes a correspondence between unified data management device information and at least one of the following: a second support group identifier, second support information, and second support type information, where the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

The authentication service device, for example, the AUSF network element, may locally configure information about a unified data management device, for example, a UDM network element, that supports management of the subscription data of the internet of things terminal device, and the information may include a supported group identifier, a supported device type (the active terminal and/or the passive terminal), and the like.

With reference to the second aspect, in some implementations of the second aspect, the authentication service device obtains a second authentication response message from the unified data management device, where the second authentication response message includes at least one of the following: identification information and/or address information of a network slice specific authentication and authorization function NSSAAF, and identification information and/or address information of an AAA server.

With reference to the second aspect, in some implementations of the second aspect, the authentication service device sends a fifth request message to a network repository device, where the fifth request message is used to request to discover an NSSAAF, and the fifth request message includes at least one of the following: a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal; the authentication service device obtains fifth response information from the network repository device, where the fifth response information includes at least one of the following: identification information and/or address information of the NSSAAF, and identification information and/or address information of an AAA server; and the authentication service device selects the NSSAAF based on the fifth response information.

With reference to the second aspect, in some implementations of the second aspect, the fifth response information is determined based on the fifth request message and sixth configuration information of the NSSAAF, where the sixth configuration information includes at least one of the following: a third support group identifier, third support information, and third support type information. The third support group identifier corresponds to a third service requester, the NSSAAF supports performing authorization and/or authentication on a terminal device corresponding to the third service requester, the third support information indicates whether the NSSAAF supports authorization and/or authentication on the internet of things device, and the third support type information indicates a device type for which the NSSAAF supports authorization and/or authentication.

In a possible implementation, the third support information indicates that the NSSAAF supports authorization and/or authentication on the internet of things device.

An authentication and authorization function of a specific network slice may locally configure information that supports the authorization and/or authentication procedure of the internet of things terminal device, and may include a supported group identifier, a supported device type (the active terminal and/or the passive terminal), and the like, and send the configuration information to a network repository device, for example, an NRF network element, to obtain an address of an AAA server by using the network repository device, thereby completing a security procedure of the terminal.

With reference to the second aspect, in some implementations of the second aspect, the first authentication request message includes network slice specific authentication and authorization function NSSAAF information and/or AAA server information, the NSSAAF information indicates an NSSAAF used to perform authorization and/or authentication, and the authentication service device sends a third authentication request message to the NSSAAF, where the third authentication request message includes at least one of the following: a device identifier, indication information, device type information, and the AAA server information, where the indication information indicates that the terminal device is an internet of things device, the device type information indicates that the terminal device is an active terminal or a passive terminal, and the AAA server information includes identification information and/or address information of the AAA server.

When the access procedure of the internet of things terminal is triggered by the service requester, network elements involved in the subsequent procedure may be determined in advance, for example, determined by the network exposure function NEF. Therefore, when the AMF subsequently receives a registration request (or an access request) from the internet of things terminal, the AMF may directly select a proper network element to execute the procedure based on network element information provided by the NEF. Therefore, an entire 5GC does not need to perform enhancement and function upgrade, and only the NEF needs to be enhanced to perform network element selection, thereby reducing required new configurations.

According to a third aspect, a communication method is provided. The method includes: A unified data management device receives a second authentication request message from an authentication service device, where the second authentication request message includes at least one of following: identification information of a terminal device, a group identifier, indication information, and device type information, the group identifier is included in the identification information, the group identifier indicates a service requester corresponding to the terminal device, the indication information indicates that the terminal device is an internet of things device, and the device type information indicates that the terminal device is an active terminal or a passive terminal; and the unified data management device determines an authentication method based on the second authentication request message, where the authentication method is used to perform authorization and/or authentication on the terminal device.

With reference to the third aspect, in some implementations of the third aspect, the unified data management device sends second configuration information to a network repository device, where the second configuration information includes at least one of the following: a second support group identifier, second support information, and second support type information, where the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

When registering with a network repository device, for example, an NRF network element, the unified data management device, for example, a UDM network element, may report a capability of supporting authorization of the internet of things device (or further report a capability of supporting authorization of an active device or a passive device) and/or a supported device identifier range (for example, a supported field used to indicate a service requester).

With reference to the third aspect, in some implementations of the third aspect, the unified data management device receives a third request message from a mobility management device, where the third request message is used to select the authentication service device, and the third request message includes at least one of the following: identification information, a group identifier, indication information, and device type information, the group identifier is included in the identification information, the group identifier indicates the service requester corresponding to the terminal device, the indication information indicates that the terminal device is the internet of things device, and the device type information indicates that the terminal device is the active terminal or the passive terminal; the unified data management device selects the authentication service device based on the third request information and fourth configuration information, where the fourth configuration information includes a correspondence between the authentication service device information and at least one of the following: a first support group identifier, first support information, and first support type information, the first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type that supports authorization and/or authentication; and the unified data management device sends third response information to the mobility management device, where the third response information includes identification information and/or address information of the authentication service device.

With reference to the third aspect, in some implementations of the third aspect, the unified data management device sends a second authentication response message to the authentication service device, where the second authentication response message includes at least one of the following: identification information and/or address information of a network slice specific authentication and authorization function NSSAAF, and identification information and/or address information of an AAA server.

With reference to the third aspect, in some implementations of the third aspect, the unified data management device receives a registration request message from the mobility management device, where the registration request message includes identification information of the mobility management device and the identification information and/or the address information of the authentication service device, and the registration request message indicates the mobility management device and the authentication service device that serve the terminal device.

With reference to the third aspect, in some implementations of the third aspect, the unified data management device stores the identification information of the authentication service device.

According to a fourth aspect, a communication method is provided. The method includes: A network exposure function receives a service request message from a service requester, where the service request message is used to perform a service operation on at least one terminal device corresponding to the service requester; the network exposure function determines network function information based on the service request message, where a network function corresponding to the network function information is used to perform authorization and/or authentication on the at least one terminal device; and the network exposure function sends a sixth request message to a mobility management device, where the sixth request message includes the network function information, and the network function information includes identification information and/or address information of at least one of the following network functions: an authentication service device, a unified data management device, a network slice specific authentication and authorization function NSSAAF, and an AAA server.

According to a fifth aspect, a communication method is provided. The method includes: A terminal device sends a request message to a reader, where the terminal device accesses a network by using an internet of things access technology, the request message includes identification information and/or a device type of the terminal device, and the device type information indicates that the terminal device is an active terminal or a passive terminal.

According to a sixth aspect, a communication method is provided. The method includes: A reader receives a request message from a terminal device, where the terminal device accesses a network by using an internet of things access technology, the request message includes identification information and/or a device type of the terminal device, and the device type information indicates that the terminal device is an active terminal or a passive terminal; and the reader sends a first message to a mobility management device, where the first message includes the identification information of the terminal device, the first message indicates the device type of the terminal device, the first message is used to determine an authentication service device, and the authentication service device supports authorization and/or authentication on a device that accesses the network by using the internet of things access technology.

According to a seventh aspect, a communication method is provided. The method includes: A network repository device receives first configuration information from an authentication service device, where the first configuration information includes at least one of the following: a first support group identifier, first support information, and first support type information, the first support group identifier corresponds to a first service requester, the authentication service device supports authorization and/or authentication on a terminal device corresponding to the first service requester, the first support information indicates whether the authentication service device supports authorization and/or authentication on the internet of things device, and the first support type information indicates a device type for which the authentication service device supports authorization and/or authentication; the network repository device receives a first request message from a mobility management device, where the first request message includes at least one of the following: a group identifier, indication information, and device type information, where the group identifier indicates a service requester corresponding to the terminal device, the indication information indicates that the terminal device is the internet of things device, and the device type information indicates that the terminal device is an active terminal or a passive terminal; the network repository device discovers the authentication service device based on the first request message and the first configuration information; and the network repository device sends first response information to the mobility management device, where the first response information includes identification information and/or address information of the authentication service device.

With reference to the seventh aspect, in some implementations of the seventh aspect, the network repository device receives second configuration information from the unified data management device, where the second configuration information includes at least one of the following: a second support group identifier, second support information, and second support type information, where the second support group identifier indicates that the second service requester is supported, the unified data management device supports management of subscription data of a terminal device corresponding to the second service requester, the second support information indicates whether subscription data of an internet of things device is supported, and the second support type information indicates a device type corresponding to the terminal device that supports management of the subscription data; the network repository device receives a second request message from the mobility management device, where the second request message includes at least one of the following: a group identifier, indication information, and device type information, where the group identifier indicates a service requester corresponding to the terminal device, the indication information indicates that the terminal device is the internet of things device, and the device type information indicates that the terminal device is an active terminal or a passive terminal; the network repository device discovers the authentication service device based on the second request message and the second configuration information; and the network repository device sends second response information to the mobility management device, where the second response information includes identification information and/or address information of the unified data management device.

With reference to the seventh aspect, in some implementations of the seventh aspect, the network repository device receives second configuration information from the unified data management device, where the second configuration information includes at least one of the following: a second support group identifier, second support information, and second support type information, where the second support group identifier indicates that the second service requester is supported, the unified data management device supports management of subscription data of a terminal device corresponding to the second service requester, the second support information indicates whether subscription data of an internet of things device is supported, and the second support type information indicates a device type corresponding to the terminal device that supports management of the subscription data; the network repository device receives a second request message from the mobility management device, where the second request message includes at least one of the following: a group identifier, indication information, and device type information, where the group identifier indicates a service requester corresponding to the terminal device, the indication information indicates that the terminal device is the internet of things device, and the device type information indicates that the terminal device is an active terminal or a passive terminal; the network repository device discovers the authentication service device based on the second request message and the second configuration information; and the network repository device sends second response information to the mobility management device, where the second response information includes identification information and/or address information of the unified data management device.

With reference to the seventh aspect, in some implementations of the seventh aspect, the network repository device receives a fourth request message from the authentication service device, where the fourth request message includes at least one of the following: a group identifier, indication information, and device type information, where the group identifier indicates a service requester corresponding to the terminal device, the indication information indicates that the terminal device is the internet of things device, and the device type information indicates that the terminal device is the active terminal or the passive terminal; the network repository device discovers the authentication service device based on the fourth request message and the second configuration information; and the network repository device sends fourth response information to the authentication service device, where the fourth response information includes the identification information and/or the address information of the unified data management device.

With reference to the seventh aspect, in some implementations of the seventh aspect, the network repository device receives sixth configuration information from a network slice specific authentication and authorization function NSSAAF, where the sixth configuration information includes at least one of the following: a third support group identifier, third support information, and third support type information, where the third support group identifier corresponds to a third service requester, the NSSAAF supports performing authorization and/or authentication on a terminal device corresponding to the third service requester, the third support information indicates whether the NSSAAF supports authorization and/or authentication on the internet of things device, and the third support type information indicates a device type for which the NSSAAF supports authorization and/or authentication; the network repository device receives a fifth request message from the authentication service device, where the fifth request message includes at least one of the following: a group identifier, indication information, and device type information, where the group identifier indicates a service requester corresponding to the terminal device, the indication information indicates that the terminal device is the internet of things device, and the device type information indicates that the terminal device is the active terminal or the passive terminal; the network repository device discovers the authentication service device based on the fifth request message and the sixth configuration information; and the network repository device sends fifth response information to the authentication service device, where the fifth response information includes identification information and/or address information of the NSSAAF, and identification information and/or address information of the AAA server.

According to an eighth aspect, a communication apparatus is provided. The apparatus includes: an interface unit, configured to obtain a first message, where the first message includes identification information of a terminal device, the first message indicates a device type of the terminal device, and the terminal device accesses a network by using an internet of things access technology; a processing unit, configured to select an authentication service device based on the first message, where the authentication service device supports authorization and/or authentication on the terminal device that accesses the network by using the internet of things access technology; and the interface unit is further configured to send a first authentication request message to the authentication service device, where the first authentication request message includes the identification information of the terminal device, and the first authentication request message is used to request to perform authorization and/or authentication on the terminal device.

With reference to the eighth aspect, in some implementations of the eighth aspect, the first message includes device type information and/or indication information, the device type information indicates that the terminal device is an active terminal or a passive terminal, the indication information indicates that the terminal device is an internet of things device, and the mobility management device determines, based on the first message, that the terminal device is the internet of things device; and the processing unit is configured to: determine, based on the first message, that the terminal device is an internet of things device, and select the authentication service device that supports authorization and/or authentication on the internet of things device.

With reference to the eighth aspect, in some implementations of the eighth aspect, the interface unit is configured to send a first request message to a network repository device based on the first message, where the first request message is used to request to discover the authentication service device, and the first request message includes at least one of the following: a group identifier, the indication information, and the device type information, where the group identifier indicates a service requester corresponding to the terminal device, the indication information indicates that the terminal device is the internet of things device, and the device type information indicates that the terminal device is the active terminal or the passive terminal; the interface unit is further configured to obtain first response information from the network repository device, where the first response information includes identification information and/or address information of the authentication service device; and the processing unit is configured to select the authentication service device based on the first response information.

With reference to the eighth aspect, in some implementations of the eighth aspect, the first response information is determined based on the first request message and first configuration information of the authentication service device, where the first configuration information includes at least one of the following: a first support group identifier, first support information, and first support type information, the first support group identifier corresponds to the first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication.

With reference to the eighth aspect, in some implementations of the eighth aspect, the interface unit is further configured to send a second request message to a network repository device, where the second request message is used to request to discover a unified data management device, and the second request message includes at least one of the following: identification information, a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal; the interface unit is further configured to obtain second response information from the network repository device, where the second response information includes identification information and/or address information of the unified data management device; and the processing unit is further configured to select the unified data management device based on the second response information.

With reference to the eighth aspect, in some implementations of the eighth aspect, the second response information is determined based on second request information and second configuration information of the unified data management device, where the second configuration information includes at least one of the following: a second support group identifier, second support information, and second support type information, the second support group identifier indicates that the second service requester is supported, the unified data management device supports management of subscription data of a terminal device corresponding to the second service requester, the second support information indicates whether management of subscription data of an internet of things device is supported, and the second support type information indicates a device type corresponding to the terminal device that is supported by the unified data management device and that manages the subscription data.

With reference to the eighth aspect, in some implementations of the eighth aspect, the processing unit is configured to select the authentication service device based on the first message and third configuration information, where the third configuration information includes a correspondence between authentication service device information and at least one of the following: a first support group identifier, first support information, and first support type information, where the authentication service device information includes an identifier and/or address information of the authentication service device, the first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication.

With reference to the eighth aspect, in some implementations of the eighth aspect, the interface unit is configured to send a third request message to a unified data management device, where the third request message is used to select the authentication service device, and the third request message includes at least one of the following: identification information, a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal; the interface unit is further configured to obtain third response information from the unified data management device, where the third response information includes identification information and/or address information of the authentication service device; and the processing unit is configured to determine the authentication service device based on the third response information.

With reference to the eighth aspect, in some implementations of the eighth aspect, the third response information is determined based on the third request information and fourth configuration information, where the fourth configuration information includes a correspondence between authentication service device information and at least one of the following: a first support group identifier, first support information, and first support type information. The first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication.

With reference to the eighth aspect, in some implementations of the eighth aspect, the processing unit is configured to select the unified data management device based on the first message and the third configuration information, where the third configuration information includes a correspondence between unified data management device information and at least one of the following: a second support group identifier, second support information, and second support type information, where the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

With reference to the eighth aspect, in some implementations of the eighth aspect, the interface unit is configured to send a registration request message to the unified data management device, where the registration request message includes identification information of the mobility management device and the identification information and/or the address information of the authentication service device, and the registration request message indicates the mobility management device and the authentication service device that serve the terminal device.

With reference to the eighth aspect, in some implementations of the eighth aspect, the apparatus further includes a storage unit, configured to store the identification information of the authentication service device and/or the identification information of the unified data management device.

With reference to the eighth aspect, in some implementations of the eighth aspect, the interface unit is configured to obtain a sixth request message from a network exposure function, where the sixth request message includes network function information, and the network function information includes identification information and/or address information of at least one of the following devices: the authentication service device, a unified data management device, a network slice specific authentication and authorization function NSAAF, and an AAA server; and the processing unit is configured to select the authentication service device and/or the unified data management device based on the first message and the sixth request message.

According to a ninth aspect, a communication apparatus is provided. The apparatus includes an interface unit, configured to receive a first authentication request message from a mobility management device, where the first authentication request message includes identification information of a terminal device, the first authentication request message is used to request to perform authorization and/or authentication on the terminal device, and the terminal device accesses a network by using an internet of things access technology.

With reference to the ninth aspect, in some implementations of the ninth aspect, the first authentication request message includes device type information and/or indication information, the device type information indicates that the terminal device is an active terminal or a passive terminal, the indication information indicates that the terminal device is an internet of things device, and a processing unit is configured to select the terminal device as the internet of things device based on the first authentication request message.

With reference to the ninth aspect, in some implementations of the ninth aspect, the processing unit is configured to select a unified data management device based on the first authentication request message, where the unified data management device supports authorization and/or authentication on a device that accesses the network by using the internet of things access technology; and the interface unit is configured to send a second authentication request message to the unified data management device, where the second authentication request message is used to determine an authentication method, and the authentication method is used to perform authorization and/or authentication on the terminal device.

With reference to the ninth aspect, in some implementations of the ninth aspect, the first authentication request message includes the terminal device type information and/or the indication information, where the device type information indicates that the terminal device is the active terminal or the passive terminal, and the indication information indicates that the terminal device is the internet of things device. The second authentication request message includes at least one of the following: identification information, a group identifier, indication information, and device type information, where the group identifier is included in the identification information, and the group identifier indicates a service requester corresponding to the terminal device.

With reference to the ninth aspect, in some implementations of the ninth aspect, the interface unit is configured to send first configuration information to a network repository device, where the first configuration information includes at least one of the following: a first support group identifier, first support information, and first support type information, where the first support group identifier corresponds to a first service requester, the authentication service device supports performing authorization and/or authentication on a terminal device corresponding to the first service requester, the first support information indicates whether the authentication service device supports authorization and/or authentication on the internet of things device, and the first support type information indicates a device type for which the authentication service device supports authorization and/or authentication.

With reference to the ninth aspect, in some implementations of the ninth aspect, the interface unit is configured to send a fourth request message to a network repository device based on the first authentication request message, where the fourth request message is used to request to discover the unified data management device, and the fourth request message includes at least one of the following: a group identifier, indication information, and device type information, where the group identifier indicates the service requester corresponding to the terminal device, the indication information indicates that the terminal device is the internet of things device, and the device type information indicates that the terminal device is the active terminal or the passive terminal; the interface unit is configured to obtain fourth response information from the network repository device, where the fourth response information includes identification information and/or address information of the unified data device; and the processing unit is configured to select the unified data management device based on the fourth response information.

With reference to the ninth aspect, in some implementations of the ninth aspect, the fourth response information is determined based on the fourth request message and second configuration information of the unified data management device, where the second configuration information includes at least one of the following: a second support group identifier, second support information, and second support type information, where the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

With reference to the ninth aspect, in some implementations of the ninth aspect, the processing unit is configured to select the unified data management device based on the first authentication information and fifth configuration information, where the fifth configuration information includes a correspondence between unified data management device information and at least one of the following: a second support group identifier, second support information, and second support type information, where the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

With reference to the ninth aspect, in some implementations of the ninth aspect, the interface unit is configured to obtain a second authentication response message from the unified data management device, where the second authentication response message includes at least one of the following: identification information and/or address information of a network slice specific authentication and authorization function NSSAAF, and identification information and/or address information of an AAA server.

With reference to the ninth aspect, in some implementations of the ninth aspect, the interface unit is configured to send a fifth request message to a network repository device, where the fifth request message is used to request to discover an NSSAAF, and the fifth request message includes at least one of the following: a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal; the interface unit is configured to obtain fifth response information from the network repository device, where the fifth response information includes at least one of the following: identification information and/or address information of the NSSAAF, and identification information and/or address information of an AAA server; and the processing unit is configured to select the NSSAAF based on the fifth response information.

With reference to the ninth aspect, in some implementations of the ninth aspect, the fifth response information is determined based on the fifth request message and sixth configuration information of the NSSAAF, where the sixth configuration information includes at least one of the following: a third support group identifier, third support information, and third support type information. The third support group identifier corresponds to a third service requester, the NSSAAF supports performing authorization and/or authentication on a terminal device corresponding to the third service requester, the third support information indicates whether the NSSAAF supports authorization and/or authentication on the internet of things device, and the third support type information indicates a device type for which the NSSAAF supports authorization and/or authentication.

With reference to the ninth aspect, in some implementations of the ninth aspect, the first authentication request message includes network slice specific authentication and authorization function NSSAAF information and/or AAA server information, the NSSAAF information indicates an NSSAAF used to perform authorization and/or authentication; and the interface unit is configured to send a third authentication request message to the NSSAAF, where the third authentication request message includes at least one of the following: a device identifier, indication information, device type information, and the AAA server information, where the indication information indicates that the terminal device is an internet of things device, the device type information indicates that the terminal device is an active terminal or a passive terminal, and the AAA server information includes identification information and/or address information of the AAA server.

According to a tenth aspect, a communication apparatus is provided. The apparatus includes: an interface unit, configured to receive a second authentication request message from an authentication service device, where the second authentication request message includes at least one of following: identification information of a terminal device, a group identifier, indication information, and device type information, the group identifier is included in the identification information, the group identifier indicates a service requester corresponding to the terminal device, the indication information indicates that the terminal device is an internet of things device, and the device type information indicates that the terminal device is an active terminal or a passive terminal; and a processing unit, configured to determine an authentication method based on the second authentication request message, where the authentication method is used to perform authorization and/or authentication on the terminal device.

With reference to the tenth aspect, in some implementations of the tenth aspect, the interface unit is configured to send second configuration information to a network repository device, where the second configuration information includes at least one of the following: a second support group identifier, second support information, and second support type information, where the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

With reference to the tenth aspect, in some implementations of the tenth aspect, the interface unit is configured to receive a third request message from a mobility management device, where the third request message is used to select the authentication service device, and the third request message includes at least one of the following: identification information, a group identifier, indication information, and device type information, the group identifier is included in the identification information, the group identifier indicates the service requester corresponding to the terminal device, the indication information indicates that the terminal device is the internet of things device, and the device type information indicates that the terminal device is the active terminal or the passive terminal; the processing unit is configured to select the authentication service device based on the third request information and fourth configuration information, where the fourth configuration information includes a correspondence between the authentication service device information and at least one of the following: a first support group identifier, first support information, and first support type information, the first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication; and the interface unit is further configured to send third response information to the mobility management device, where the third response information includes identification information and/or address information of the authentication service device.

With reference to the tenth aspect, in some implementations of the tenth aspect, the interface unit is configured to send a second authentication response message to the authentication service device, where the second authentication response message includes at least one of the following: identification information and/or address information of a network slice specific authentication and authorization function NSSAAF, and identification information and/or address information of an AAA server.

With reference to the tenth aspect, in some implementations of the tenth aspect, the interface unit is configured to receive a registration request message from the mobility management device, where the registration request message includes identification information of the mobility management device and the identification information and/or the address information of the authentication service device, and the registration request message indicates the mobility management device and the authentication service device that serve the terminal device.

With reference to the tenth aspect, in some implementations of the tenth aspect, the apparatus further includes a storage unit, configured to store the identification information of the authentication service device.

According to an eleventh aspect, a communication apparatus is provided. The apparatus includes: an interface unit, configured to receive a service request message from a service requester, where the service request message is used to perform a service operation on at least one terminal device corresponding to the service requester; a network exposure function, configured to determine network function information based on the service request message, where a network function corresponding to the network function information is used to perform authorization and/or authentication on the at least one terminal device; and the interface unit is further configured to send the service request message to a mobility management device, where the service request message includes network function information, and the network function information includes identification information and/or address information of at least one of the following network functions: an authentication service device, a unified data management device, a network slice specific authentication and authorization function NSSAAF, and an AAA server.

According to a twelfth aspect, a communication apparatus is provided. The apparatus includes an interface unit, configured to send a request message to a reader, where the terminal device accesses a network by using an internet of things access technology, the request message includes identification information and/or a device type of the terminal device, and the device type information indicates that the terminal device is an active terminal or a passive terminal.

According to a thirteenth aspect, a communication apparatus is provided. The apparatus includes an interface unit, configured to receive a request message from a terminal device, where the terminal device accesses a network by using an internet of things access technology, the request message includes identification information and/or a device type of the terminal device, and the device type information indicates that the terminal device is an active terminal or a passive terminal; and the interface unit is further configured to send a first message to a mobility management device, where the first message includes the identification information of the terminal device, the first message indicates the device type of the terminal device, the first message is used to determine an authentication service device, and the authentication service device supports authorization and/or authentication on a device that accesses the network by using the internet of things access technology.

According to a fourteenth aspect, a communication apparatus is provided. The apparatus includes an interface unit, configured to receive first configuration information from an authentication service device, where the first configuration information includes at least one of the following: a first support group identifier, first support information, and first support type information, the first support group identifier corresponds to a first service requester, the authentication service device supports authorization and/or authentication on a terminal device corresponding to the first service requester, the first support information indicates whether authorization and/or authentication on the internet of things device is supported, and the first support type information indicates a device type for which the authentication service device supports authorization and/or authentication; the interface unit is further configured to receive a first request message from a mobility management device, where the first request message includes at least one of the following: a group identifier, indication information, and device type information, where the group identifier indicates a service requester corresponding to the terminal device, the indication information indicates that the terminal device is the internet of things device, and the device type information indicates that the terminal device is an active terminal or a passive terminal; the processing unit is configured to discover the authentication service device based on the first request message and the first configuration information; and the interface unit is configured to send first response information to the mobility management device, where the first response information includes identification information and/or address information of the authentication service device.

With reference to the fourteenth aspect, in some implementations of the fourteenth aspect, the interface unit is configured to receive second configuration information from a unified data management device, where the second configuration information includes at least one of the following: a second support group identifier, second support information, and second support type information, the second support group identifier corresponds to a second service requester, the unified data management device supports management of subscription data of a terminal device corresponding to the second service requester, the second support information indicates whether the unified data management device supports management of subscription of data of the internet of things device, and the second support type information indicates a device type corresponding to the terminal device that is supported by the unified data management device and that manages the subscription data; the interface unit is further configured to receive a second request message from a mobility management device, where the second request message includes at least one of the following: a group identifier, indication information, and device type information, where the group identifier indicates a service requester corresponding to the terminal device, the indication information indicates that the terminal device is an internet of things device, and the device type information indicates that the terminal device is the active terminal or the passive terminal; the processing unit is configured to discover the authentication service device based on the second request message and the second configuration information; and the interface unit is configured to send second response information to the mobility management device, where the second response information includes the identification information and/or the address information of the unified data management device.

With reference to the fourteenth aspect, in some implementations of the fourteenth aspect, the interface unit is configured to receive second configuration information from a unified data management device, where the second configuration information includes at least one of the following: a second support group identifier, second support information, and second support type information, the second support group identifier corresponds to a second service requester, the unified data management device supports management of subscription data of a terminal device corresponding to the second service requester, the second support information indicates whether the unified data management device supports management of subscription of data of the internet of things device, and the second support type information indicates a device type corresponding to the terminal device that is supported by the unified data management device and that manages the subscription data; the interface unit is further configured to receive a second request message from a mobility management device, where the second request message includes at least one of the following: a group identifier, indication information, and device type information, where the group identifier indicates a service requester corresponding to the terminal device, the indication information indicates that the terminal device is an internet of things device, and the device type information indicates that the terminal device is the active terminal or the passive terminal; the processing unit is configured to discover the authentication service device based on the second request message and the second configuration information; and the interface unit is configured to send second response information to the mobility management device, where the second response information includes the identification information and/or the address information of the unified data management device.

With reference to the fourteenth aspect, in some implementations of the fourteenth aspect, the interface unit is configured to receive a fourth request message from the authentication service device, where the fourth request message includes at least one of the following: a group identifier, indication information, and device type information, where the group identifier indicates a service requester corresponding to the terminal device, the indication information indicates that the terminal device is the internet of things device, and the device type information indicates that the terminal device is the active terminal or the passive terminal; the processing unit is configured to discover the authentication service device based on the fourth request message and the second configuration information; and the interface unit is configured to send fourth response information to the authentication service device, where the fourth response information includes the identification information and/or the address information of the unified data management device.

With reference to the fourteenth aspect, in some implementations of the fourteenth aspect, the interface unit is configured to receive sixth configuration information from a network slice specific authentication and authorization function NSSAAF, where the sixth configuration information includes at least one of the following: a third support group identifier, third support information, and third support type information, where the third support group identifier corresponds to a third service requester, the NSSAAF supports performing authorization and/or authentication on a terminal device corresponding to the third service requester, the third support information indicates whether the NSSAAF supports authorization and/or authentication on the internet of things device, and the third support type information indicates a device type for which the NSSAAF supports authorization and/or authentication; the interface unit is further configured to receive a fifth request message from the authentication service device, where the fifth request message includes at least one of the following: a group identifier, indication information, and device type information, where the group identifier indicates a service requester corresponding to the terminal device, the indication information indicates that the terminal device is an internet of things device, and the device type information indicates that the terminal device is the active terminal or the passive terminal; the processing unit is configured to discover the authentication service device based on the fifth request message and the sixth configuration information; and the interface unit is configured to send fifth response information to the authentication service device, where the fifth response information includes identification information and/or address information of the NSSAAF and/or identification information and/or address information of the AAA server.

According to a fifteenth aspect, a communication apparatus is provided. The apparatus may be a core network device or a terminal device, or may be a component (for example, a processor, a chip, or a chip system) of a core network device or a terminal device, or may be a logical node, a logical module, or software that can implement all or some functions of a core network device or a terminal device. The apparatus has a function of implementing the first aspect to the seventh aspect and the possible implementations. The function may be implemented by hardware, or may be implemented by hardware executing corresponding software. The hardware or the software includes one or more modules corresponding to the function.

In a possible design, the apparatus includes an interface unit. The interface unit may be at least one of a transceiver, a receiver, and a transmitter. The interface unit may include a radio frequency circuit or an antenna. Optionally, the apparatus further includes a processing unit. The processing unit may be a processor. Optionally, the apparatus further includes a storage unit. The storage unit may be, for example, a memory. When the apparatus includes the storage unit, the storage unit is configured to store a program or instructions. The processing unit is connected to the storage unit. The processing unit may execute a program or instructions stored in the storage unit or other instructions, so that the apparatus performs the communication method according to the first aspect to the seventh aspect and the possible implementations.

In another possible design, when the apparatus is the chip, the chip includes an interface unit and a processing unit. The interface unit may be, for example, an input/output interface, a pin, or a circuit on the chip. The processing unit may be, for example, a processor. The processing unit may execute instructions, to cause the chip in the network device to perform the first aspect, the second aspect, the fourth aspect, the fifth aspect, and various possible implementations. Optionally, the processing unit may execute instructions in a storage unit. The storage unit may be a storage module, for example, a register or a cache, in the chip. The storage unit may alternatively be located inside a communication device but outside the chip, for example, a read-only memory (read-only memory, ROM) or another type of static storage device that can store static information and instructions, or a random access memory (random access memory, RAM).

According to a sixteenth aspect, a communication system is provided. The communication system includes the communication apparatus provided in the eighth aspect to the fourteenth aspect. The communication system may complete the communication method provided in any one of the first aspect to the seventh aspect and the possible implementations of the first aspect to the seventh aspect.

According to a seventeenth aspect, a computer-readable storage medium is provided. The computer-readable storage medium stores a computer program. When the computer program is run on a computer, the computer is enabled to perform instructions of the method according to any one of the first aspect to the seventh aspect or the possible implementations of the first aspect to the seventh aspect.

According to an eighteenth aspect, a communication apparatus is provided. The communication apparatus includes a processor. The processor may execute instructions, to enable the method according to any one of the first aspect to the seventh aspect or the possible implementations of the first aspect to the seventh aspect to be performed.

The processor mentioned above may be a general-purpose central processing unit (central processing unit, CPU), a microprocessor, an application-specific integrated circuit (application-specific integrated circuit, ASIC), or one or more integrated circuits for controlling program execution of the communication methods according to the first aspect to the fifth aspect.

In a possible implementation, the communication apparatus further includes a memory, configured to store the foregoing executable instructions. Optionally, the memory and the processor are integrated together.

In a possible implementation, the communication apparatus further includes a communication interface, configured to input and/or output signaling or data.

In a possible implementation, the communication apparatus is a chip.

According to a nineteenth aspect, a computer program product is provided. The product includes computer program code. When the computer program code is run, the computer program code is used to perform instructions of the method according to any one of the first aspect to the seventh aspect or the possible implementations of the first aspect to the seventh aspect.

According to a twentieth aspect, a chip system is provided. The chip system includes a memory and a processor. The memory is configured to store instructions, and the processor is configured to invoke the instructions from the memory and run the instructions, so that the method according to any one of the first aspect to the seventh aspect and the possible implementations of the first aspect to the seventh aspect is performed.

The chip system may include an input circuit or interface for sending information or data, and an output circuit or interface for receiving information or data.

Specifically, for beneficial effects of other aspects, refer to the beneficial effects described in the first aspect to the fourth aspect.

### BRIEF DESCRIPTION OF DRAWINGS

FIG. 1 is a diagram of a communication system applicable to an embodiment of this application;
FIG. 2 is a diagram of an architecture of an ambient internet of things applicable to an embodiment of this application;
FIG. 3 is a diagram of a protocol stack supported by an internet of things terminal according to this application;
FIG. 4 is a diagram of a structure of a user hidden identifier according to this application;
FIG. 5 is a schematic flowchart of discovering a network element in a same network according to this application;
FIG. 6 is a diagram of a registration procedure according to this application;
FIG. 7 is a diagram of an authentication procedure according to this application;
FIG. 8A and FIG. 8B are a schematic flowchart of a communication method according to an embodiment of this application;
FIG. 9 is a schematic flowchart of another communication method according to an embodiment of this application;
FIG. 10A and FIG. 10B are a schematic flowchart of still another communication method according to an embodiment of this application;
FIG. 11A and FIG. 11B are a schematic flowchart of yet another communication method according to an embodiment of this application;
FIG. 12 is a block diagram of a communication apparatus according to an embodiment of this application; and
FIG. 13 is a block diagram of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a global system for mobile communication (global system of mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system, a 6th generation (6th generation, 6G) system, a new radio (new radio, NR) system, and another future communication system.

The following describes technical solutions of embodiments in this application with reference to accompanying drawings.

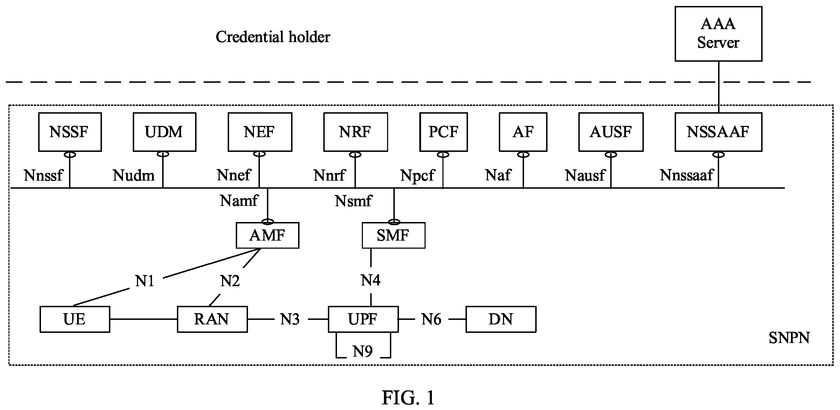

FIG. 1 is a diagram of a communication system. As shown in FIG. 1, the network includes an access and mobility management function (access and mobility management function, AMF), a capability exposure function (network exposure function, NEF), a network repository function (network repository function, NRF), unified data management (unified data management, UDM), a radio access network (radio access network, RAN) device, a policy control function (policy control function, PCF), user equipment (user equipment, UE), a policy control function (policy control function, PCF), a user plane function (user plane function, UPF), a data network (data network, DN), an authentication server function (authentication server function, AUSF), a network slice selection function (network slice selection function, NSSF), an AAA server (authentication, authorization, and accounting server, AAA Server), a network slice specific and SNPN authentication and authorization function (network slice-specific and SNPN authentication and authorization function, NSSAAF), and the like.

It should be understood that FIG. 1 is merely an example of a diagram. A quantity and types of network elements (or devices) actually deployed in a network are not limited in this embodiment of this application.

Main functions of the devices shown in FIG. 1 are described as follows.

UE may be referred to as user equipment (user equipment, UE), a terminal, an access terminal, a subscriber unit, a subscriber station, a mobile station, a mobile console, a remote station, a remote terminal, a mobile device, a user terminal, a wireless communication device, a user agent, or a user apparatus. The UE may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN) or a non-terrestrial network (non-terrestrial networks, NTN), or the like. The UE may alternatively be a terminal device, a logical entity, or an intelligent device, for example, a terminal device such as a mobile phone or an intelligent terminal, or a communication device such as a server, a gateway, a base station, or a controller, or an internet of things (internet of things, IoT) device such as a tag, a passive tag, an active tag, a semi-active tag, a sensor, an electricity meter, or a water meter. The UE may alternatively be an uncrewed aerial vehicle (unmanned aerial vehicle or uncrewed aerial vehicle, UAV) having a communication function. When the terminal is a passive or semi-active terminal or tag, the terminal may receive or send data by obtaining power. The energy may be harvested from radio, solar energy, light energy, wind energy, water energy, heat energy, kinetic energy, and the like. A manner in which the passive or semi-active terminal obtains the power is not limited in this application. This is not limited in embodiments of this application. It should be noted that the tag in this application may be in a tag form, or may be in any terminal form.

It should be understood that the UE may be any device that can access a network. The UE and the access network device may communicate with each other by using an air interface technology.

A radio access network device (radio access network, RAN) (also referred to as an access network device) corresponds to different access networks in 5G, for example, wired access and wireless base station access. The RAN device in this application includes but is not limited to: a next-generation base station (gnodeB, gNB), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (base band unit, BBU), a transmission point (transmitting and receiving point, TRP), a transmission point (transmitting point, TP), a mobile switching center, and the like in 5G.

The operation requester (or referred to as a service requester or a third party) may be a server or an application function. In this embodiment of this application, the operation requester may be understood as a device that sends an operation instruction. For example, the operation requester may be a server (server), a P-IoT server, an application function (application function, AF), or another device that sends an operation instruction. The operation requester may correspond to a specific type of user, and the specific type of user may include an enterprise, a tenant, a third party, or a company. This is not limited. That the operation requester corresponds to the specific type of user may be understood as that the operation requester belongs to the specific type of user and is managed by the specific type of user.

Unified data management (unified data management, UDM) may also be referred to as a unified data management network element, a unified data management entity, a data management device, or a unified data management device. The unified data management network element is configured to process terminal device identification, access authentication, registration, mobility management, and the like. In a 5G communication system, the unified data management may be a UDM or a unified data management device. In a future communication system, the unified data management may still be a UDM network element, or may have another name. This is not limited in embodiments of this application. The unified data management device may be a core network device. The unified data management device may be a control plane device.

A policy control function (policy control function, PCF) may also be referred to as a policy control network element, a policy control function network element, a policy control device, a policy control function entity, or the like. The policy control function is mainly responsible for policy control functions such as session-and service flow-level charging, quality of service (quality of service, QoS) bandwidth guarantee and mobility management, and UE policy decision.

A session management function (session management function, SMF) may also be referred to as a session management device. The device may be configured to be responsible for session management (including session establishment, modification, and release) of user equipment, selection and reselection of a user plane function network element, internet protocol (internet protocol, IP) address allocation of the user equipment, QoS control, and the like. For example, in 5G, the session management network element may be a session management function SMF network element. In a future communication system, for example, in 6G, the session management network element may still be an SMF network element, or may have another name. This is not limited in this application. When the session management network element is an SMF network element, the SMF may provide an Nsmf service.

An access and mobility management function (access and mobility management function, AMF) may also be referred to as an access and mobility management function entity, an access and mobility management device, an access and mobility management network element, an access management device, or a mobility management device. The access and mobility management function is a type of core network device, and is mainly used for mobility management, access management, and the like. The access and mobility management function may be configured to implement functions other than session management in functions of a mobility management entity (mobility management entity, MME), for example, lawful interception, access authorization (or authentication), user equipment registration, mobility management, tracking area update procedure, reachability detection, session management network element selection, and mobility status transition management. For example, in 5G, the access and mobility management network element may be an access and mobility management function (access and mobility management function, AMF) network element. In future communication, for example, in 6G, the access and mobility management network element may still be an AMF network element, or may have another name. This is not limited in this application. When the access and mobility management network element is the AMF network element, the AMF may provide an Namf service.

A user plane function (user plane function, UPF) may also be referred to as a user plane device, a user plane function network element, a user plane network element, or a user plane function entity. The user plane function is a type of core network device. The device may be responsible for forwarding and receiving user data in the user equipment. The user plane function network element may receive user data from a data network, and transmit the user data to the user equipment by using the access network element. The user plane function network element may further receive user data from the user equipment by using the access network element, and forward the user data to the data network. A transmission resource and a scheduling function that are used by the user plane function network element to provide a service for the user equipment are managed and controlled by the session management function network element.

An authentication server function (authentication server function, AUSF) may also be referred to as an authentication service function network element, an authentication service function entity, an authentication service device, or an authentication device. The authentication server function is mainly used for user authentication and performing authorization, that is, authorization between the UE and the operator network. After receiving an authentication request initiated by a subscriber, the authentication server function network element may perform authorization and/or authentication on the subscriber by using authentication information and/or authorization information stored in the unified data management network element, or generate authentication information and/or authorization information of the subscriber by using the unified data management network element. The authentication server function network element may feed back the authentication information and/or the authorization information to the subscriber. In a possible implementation, the authentication server function network element may also be integrated with the unified data management network element. In a 5G communication system, the authentication server function network element may be an authentication server function (authentication server function, AUSF) network element. In a future communication system, the unified data management may still be an AUSF, or may have another name. This is not limited in embodiments of this application.

A network repository function (network repository function, NRF) may also be referred to as a network repository device, a network repository function network element, or a network repository function entity. The network repository function is mainly used to support a service discovery function. The network repository function receives a network element discovery request from a network element function or a service communication agent (service communication proxy, SCP), and may feedback network element discovery request information. In addition, the NRF is further configured to maintain information about available network functions and services supported by the available network functions. The network repository function can also be understood as a network storage device. A discovery process is a process in which a requirement network function (network function, NF) implements specific NF or specific service addressing by using the NRF. The NRF provides an IP address, a fully qualified domain name (fully qualified domain name, FQDN), or uniform resource identifier (unified resource identifier, URI) of a corresponding NF instance or an NF service instance. In addition, the NRF can provide a network identifier (such as a PLMN ID) to implement an inter-PLMN discovery procedure. To implement addressing and discovery of network element functions, each network element needs to be registered in the NRF. Some network element functions may be registered in the NRF when the network element runs for the first time. The network storage function device may be a core network device.

A network exposure function (network exposure function, NEF) may also be referred to as a network exposure device, a network exposure function entity, a network exposure function network element, a network capability exposure function entity, a network capability exposure function device, a network capability exposure function network element, a network capability exposure device, or the like. The network exposure function is mainly used to support the exposure of capabilities and events, for example, to securely expose services and capabilities provided by 3GPP network functions to external systems.

A user database (user data repository, UDR) may also be referred to as a user database entity, a user database network element, a user database device, or the like. The user database may be understood as the name of the unified data repository in the 5G architecture. The user database mainly includes the following functions: access and storage functions for data of types such as subscription data, policy data, and application data.

An authentication, authorization, and accounting server (authentication authorization accounting server, AAA server) may also be referred to as an authentication and authorization server, an authentication and authorization device, an authentication device, an authentication, authorization, and accounting device, or the like. It is a server program that can process user access requests and provide authentication, authorization, and account services. The AAA server usually works with network access control, gateway servers, databases, and user information directories. A network connection server interface that collaborates with the AAA server is a remote authentication dial-in user service (RADIUS).

A network slice and standalone non-public network authentication and authorization function (network slice-specific and SNPN authentication and authorization function) is mainly configured to support specific network slice authentication and authorization with an AAA server or an AAA proxy, and support access to an SNPN by using a credential from a credential holder (credentials holder, CH), where the credential holder is authenticated by using the AAA server.

As shown in FIG. 1, a terminal device accesses a network through an RAN device.

The terminal device communicates with an AMF through an N1 interface (N1 for short).

The RAN communicates with the AMF through an N2 interface (N2 for short).

The RAN communicates with a UPF through an N3 interface (N3 for short).

A UPF communicates with the UPF through an N9 interface (N9 for short).

The UPF communicates with a DN through an N6 interface (N6 for short).

In addition, the control plane functions such as the AMF, the SMF, the NEF, the NRF, the PCF, or the UDM shown in FIG. 1 may also interact with each other by using a service-based interface.

For example, a service-based interface provided by the AMF externally may be Namf.

A service-based interface provided by the NSSF externally may be Nnssf.

A service-based interface provided by the UDM externally may be Nudm.

A service-based interface provided by the NEF externally may be Nnef.

A service-based interface provided by the NRF externally may be Nnrf.

A service-based interface provided by the PCF externally may be Npcf.

A service-based interface provided by the AF externally may be Naf.

A service-based interface provided by the AUSF externally may be Nausf.

A service-based interface provided by the NSSAAF externally may be Nnssaaf.

A service-based interface provided by the SMF externally may be Nsmf.

It should be understood that the RAN, the SMF, the PCF, or the AF in embodiments of this application may also be referred to as a communication apparatus or a communication device, and may be a general-purpose device or a dedicated device. This is not specifically limited in this application.

It should be further understood that the foregoing names are merely used to distinguish between different functions, and do not represent that these devices are separate physical devices. Specific forms of the foregoing devices are not limited in this application. For example, the devices may be integrated into a same physical device, or may be separately different physical devices. In actual deployment, the network elements or devices may be co-located. For example, the access and mobility management network element may be co-located with the session management network element. The session management network element may be co-located with the user plane network element. When two network elements are co-located, interaction between the two network elements provided in embodiments of this application becomes an internal operation of the co-located network element or may be omitted.

It may be understood that the foregoing function may be a network element in a hardware device, may be a software function running on dedicated hardware, a combination of hardware and software, or a virtualization function instantiated on a platform (for example, a cloud platform).

It should be noted that names of the devices (such as the PCF and the AMF) in FIG. 1 are merely names, and the names do not constitute a limitation on functions of the devices. In a 5G network and another future network, the devices may alternatively have other names. This is not specifically limited in this application. For example, in a 6G network, some or all of the foregoing network elements may still use terms in 5G, or may have other names. A general description is provided herein. Details are not described again below.

It should be noted that the technical solutions in embodiments of this application are applicable to a 5G network, and are also applicable to a 4G network, a 6G network, a future communication network, and the like.

To better describe the technical solutions in embodiments of this application, the following describes technical terms related to the technical solutions in embodiments of this application.

### 1. Ambient internet of things (ambient-IoT)

The ambient internet of things may also be referred to as an ambient power-enabled internet of things (ambient power-enabled ambient IoT), or referred to as a passive internet of things (passive IoT, P-IoT), that is, some network nodes (for example, terminals or devices) may be passive (passive), semi-passive (semi-passive), or active (active). Passive and semi-passive terminals may communicate by using a reflected carrier, that is, the passive and semi-passive terminals need to rely on an external carrier source for communication. The passive terminal may have or may not have an energy storage capacitor. If the passive terminal has an energy storage capacitor, the passive terminal needs to rely on an external environment to obtain energy for communication, for example, radio frequency energy. The semi-passive terminal may have a power amplifier, so that a communication distance is longer than that of the passive terminal. The semi-passive terminal usually has an energy storage capacitor, and may store energy such as solar energy and radio energy in an environment in the capacitor. An active terminal (active device) may actively generate a carrier (or may be understood as having a carrier recovery capability), and may perform communication without relying on an external carrier source, and therefore may have an active communication capability. In a possible implementation, the active terminal may also have an energy storage capacitor, and may obtain energy in a manner of solar energy, radio frequency energy, wind energy, water energy, tidal energy, or the like. An energy obtaining manner is not limited. These nodes are not equipped with or do not depend on power supply devices such as batteries, but obtain energy from an environment, to support data sensing, transmission, and distributed computing. The node (terminal or device) may further store the obtained energy. In this application, Ambient IoT may be understood as an ambient internet of things.

The ambient internet of things architecture may include a terminal (that is, the foregoing node or device), a reader (reader), and a server (or an application function, AF). The terminal may be in a form of a tag, or may be in any other terminal form, for example, a sensor, a license plate, or a nameplate. This is not limited. The reader may be an access network device, for example, a base station, a pole site, a micro base station, a macro base station, a relay point (for example, an integrated access and backhaul node IAB node), or a mobile base station. The reader may be a terminal device, for example, a mobile phone, an IoT device, or a handheld reader/writer. A reader (Reader) performs non-contact bidirectional data communication in a radio frequency manner, and reads and writes a terminal in a radio frequency manner, to achieve objectives of target identification and data exchange. The reader works in two ways. One is that when a terminal enters the effective identification range of the reader, it receives the radio frequency signal sent by the reader and sends the information stored in the chip using the energy obtained from the induced current (corresponding to a passive tag). The other is that the terminal can store some electrical energy through solar energy or other means, so that it can actively send signals at a specific frequency (this type of terminal can also be referred to as a semi-passive or semi-active terminal). After receiving and decoding the information, the reader sends the information to the central information system for data processing. This technology is widely used in various industries. The following lists two application scenarios.
(1) Warehouse/Transportation/Materials: Products are embedded with or attached with passive or semi-passive internet of things terminals. During logistics of products stored in warehouses and shopping malls, product-related information is automatically collected by readers. Management personnel can quickly query the product information in a system, to reduce the risk of discarding or stealing the products, improve a speed of product handover, improve accuracy, and prevent unauthorized sales and forgery.
(2) Fixed asset management: Places with a large quantity of assets or valuable items, such as libraries, art galleries, and museums, require comprehensive management procedures or strict protection measures. If the storage information of books or valuable items changes abnormally, the system immediately notifies the administrator to handle the situation.
(3) Sensing data transmission: A sensor terminal obtains energy (for example, solar energy) from the environment and can actively generate a carrier to send information. A reader (or base station) receives the signal and sends the sensing information to the server (through the core network).

The reader (reader) interacts with the tag by using a radio frequency signal or a wireless signal. It should be understood that a name of the reader is not limited in this application, and the reader may also be named a reading device or another name. In other words, it may be understood that the reader and the reader are interchangeable. The reader herein has functions related to the reading device in this application. For example, the reader has a function of performing an operation (for example, obtaining tag information, a stocktaking operation, a read operation, a write operation, an invalidation operation, or a message exchange operation with a tag) described in this application on a terminal (for example, a tag), and has a function of obtaining charging related information and/or charging information, and sending charging information to a charging function. In a possible implementation, the reader may send an instruction from a server or an application function to the tag, or the reader may send a message from the tag to the server or the application function. In a possible implementation, the reader may obtain, according to an instruction delivered by the server, information stored in a specified tag. For example, if a stocktaking operation (or may be referred to as an inventory operation) is performed, the reader obtains identification information of the tag. The identification information may be a unique identifier of the tag, or may be a temporary identifier of the tag. For example, if a read operation is performed, the reader reads data in a storage area of the tag. Optionally, in some scenarios in which information stored in the tag needs to be rewritten, the reader may further have a write function. If a write operation is performed, the reader writes data into the storage area of the tag. In addition, the reader may further perform an invalidation operation on the tag. After the invalidation operation is performed, the tag is invalidated, and an operation like tag information obtaining, a stocktaking operation, a read operation, an operation of message exchange with the tag, or a write operation cannot be performed. In a possible implementation, that the tag is invalidated and tag information obtaining cannot be performed may be understood as that the reader cannot obtain tag information of the invalidated tag after the tag is invalidated. In another possible implementation, that the tag is invalidated and an operation of message exchange with the tag cannot be performed may be understood as that the reader cannot perform message exchange with the invalidated tag after the tag is invalidated.

In this application, the reading device may be a terminal device, or may be an access network device, a pole site, an eNodeB, a gNodeB, an integrated access and backhaul (integrated access and backhaul, IAB) node, or the like. A form of the reader is not limited in this application.

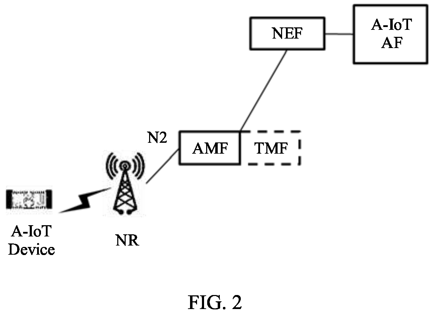

FIG. 2 is a diagram of an architecture of an ambient internet of things. In a possible implementation, a core network device (for example, a mobility management device AMF, or a newly added independent core network device, for example, an internet of things management function or a tag management function (tag management function, TMF)) may perform a procedure related to an ambient internet of things service, for example, functions such as access management, security authentication, data transmission, instruction transmission, and tag management of an internet of things terminal. In a possible implementation, an enhanced access management device (for example, an AMF) may be used to manage the internet of things terminal. In another possible implementation, a new function, for example, a tag management function or an ambient internet of things management function (ambient IoT management function, AIoTMF), is added to perform internet of things terminal management, and the function may be interconnected with the access network device. This is equivalent to that the access network device has an interface with the function, or the access network device may interact with the RAN by using the AMF. From the perspective of deployment, this function may be co-deployed with the AMF. In this application, an example in which the access network device is used as a reader, for example, a base station (a pole site or a macro site), is used for description. However, a device form of the reader is not limited in this application. The base station may also be referred to as a radio access network device (radio access network, RAN) or an access network device.

When the server performs an operation on the internet of things terminal (for example, performing operations such as inventory, reading, writing, positioning, and deactivation), the server may send an operation instruction to the internet of things terminal through the core network. The operation instruction may include but is not limited to performing operations such as obtaining information about the internet of things terminal, a stocktaking operation (or referred to as inventory operation), a reading operation, a writing operation, an invalidation operation, and exchanging information with the internet of things terminal. The instruction may include area location information, identification information of the internet of things terminal, and the like. The base station sends the access instruction to the internet of things terminal. After the internet of things terminal successfully performs random access, the base station sends an instruction to the internet of things terminal (the base station may forward, to the internet of things terminal, an instruction sent by the core network). The internet of things terminal obtains or sends corresponding information based on the instruction. For example, when the instruction is a stocktaking instruction or is to perform a stocktaking operation, the internet of things terminal sends identification information of the internet of things terminal. When the instruction is a read instruction or is to perform a read operation, the internet of things terminal sends data information stored in the tag storage area. When the instruction is a write instruction or is to perform a write operation, the internet of things terminal stores, in the storage area of the internet of things terminal, the data information that is to be written into the internet of things terminal and that is included in the instruction. The base station sends (or forwards) the information sent by the internet of things terminal to the core network, and the core network sends the information to the server.

The server may send the instruction in a manner of sending the instruction through a control plane channel. As shown in FIG. 2, the server sends an instruction to an AMF (or another core network device that has a management tag or executes a tag instruction or supports passive IoT, for example, a tag management function TMF). In this case, the server may be an application function (application function, AF), an application server (application server, AS), or an ambient internet of things application function (A-IoT AF or P-IoT AF). In a possible implementation, the P-IoT AF sends the instruction to the AMF or the TMF through the NEF (as shown in FIG. 2). According to the foregoing architecture, after obtaining the instruction, the AMF or the TMF parses the instruction from the AF, and the AMF or the TMF triggers the access network device (for example, the RAN) to perform a random access procedure of the internet of things terminal (or the tag), and sends the instruction to the internet of things terminal by using the RAN, to complete an operation on the internet of things terminal.

The internet of things terminal management function (or referred to as a tag management function) may be, for example, a tag management function TMF in FIG. 2, or the internet of things terminal management function may be an ambient IoT management function (ambient IoT management function, AIMF). The internet of things terminal management function is configured to transmit service data of a terminal device or is configured to manage an internet of things terminal (or a tag). For example, when the terminal device is a tag, the internet of things terminal management function may transmit and/or manage service data of the tag. A name of the internet of things terminal management function (or referred to as a tag management function) is not limited in this application, and may be another name. The core network function may be an access management device to perform tag management, for example, an access and mobility management function AMF. Alternatively, the core network function may be a newly added function shown in FIG. 2 to perform internet of things terminal (for example, a tag) management or perform internet of things data transmission, for example, an internet of things management function (IoT management function, IMF) or an internet of things terminal management function (IoT device management function, IDMF), and may be referred to as an ambient power-enabled internet of things management function (ambient IoT management function, AIMF), an ambient power-enabled internet of things device management function (ambient IoT device management function, AIDMF), a passive internet of things management function (passive IoT management function, PIMF), a passive internet of things terminal management function (passive IoT device management function, PIDMF), or a tag management function (tag management function, TMF). In addition, the newly added function may be interconnected with an access network device, and an interconnection manner includes direct interconnection and indirect interconnection. The direct interconnection is equivalent to that there is an interface between the access network device and the function, and the indirect interconnection is that signaling or data forwarding is performed by using the AMF. The access network device/base station serves as a reader/writer to perform operations of the internet of things terminal, for example, reading, writing, inventorying, positioning, and invalidating operations. In this application, unless otherwise specified, an internet of things management function may be exchanged with an internet of things management device.

### 2. Protocol stack of an internet of things terminal

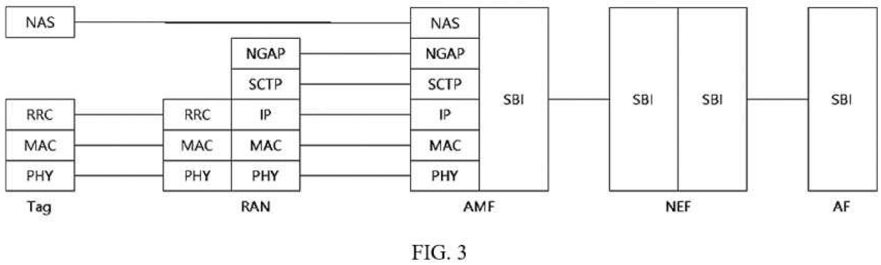

As shown in FIG. 3, in a possible implementation, a protocol stack supported by an internet of things terminal may be a control plane protocol stack. For example, the protocol stack may include a non-access stratum (non-access stratum, NAS) protocol used for interaction between the terminal and a core network, a radio resource control (radio resource control, RRC) protocol used for interaction with an access network device such as a RAN, and a MAC and a PHY are respectively protocol stacks of a link layer and a physical layer, and are used for data transmission.

### 3. Subscription permanent identifier (subscription permanent identifier, SUPI) and subscription concealed identifier (subscription concealed identifier, SUCI)

Identifiers of a terminal device defined in 3GPP mainly include a subscription permanent identifier SUPI, a subscription concealed identifier SUCI, a generic public subscription identifier (generic public subscription identifier, GPSI), a globally unique temporary identity (globally unique temporary identity, GUTI), a 5G-GUTI, a 5G temporary mobile subscriber identity (temporary mobile subscriber identity, 5G-TMSI), a 5G system temporary mobile subscriber identity (5G-S-temporary mobile subscriber identity, 5G-S-TMSI), an international mobile equipment identity (international mobile equipment identity, IMEI), an international mobile subscriber identity (international mobile subscriber identity, IMSI), and the like.

The SUPI is a globally unique permanent identifier of the terminal device. The SUPI may include the following.
(1) International mobile subscriber identity (international mobile subscriber identity, IMSI).
(2) A format of the network-specific identifier (network-specific identifier, NSI) is the format of the network access identifier (network access identifier, NAI), for example, username@realm.
(3) A global cable identifier (global cable identifier, GCI) and the operator identifier of the 5GC operator use the NAI format. This case is used to support the fixed network-broadband residential gateway (Fixed Network-Broadband Residential Gateway, FN-BRG).
(4) A global line identifier (global line identifier, GLI) and an operator identifier of a 5GC operator are in an NAI format. This case is used to support a fixed network-cable residential gateway (fixed network-cable residential gateway, FN-CRG) and a 5G-cable residential gateway (5G-cable residential gateway, 5G-CRG).

For the SUPI that includes the NSI, the SUPI is in a network access identifier (network access identifier, NAI) format, for example, username@realm. The realm part is the same as the realm part in the NSI.

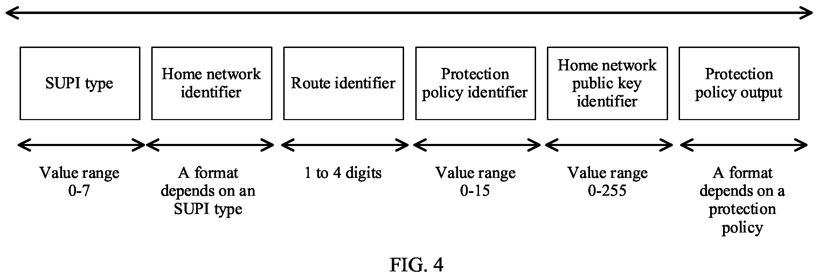

The SUCI may be understood as an encrypted SUPI. As shown in FIG. 4, the SUCI may include the following parts.
(1) SUPI Type (SUPI Type): This parameter contains a value ranging from 0 to 7. is for identifying a type corresponding to the SUPI encrypted by the SUCI; and the SUPI type is defined as follows:
   0: IMSI;
   1: network-specific identifier (NSI);
   2: global line identifier (GLI);
   3: global cable identifier (GCI);
   4 to 7: reserved for future use.

The type of SUPI to be used depends on the type of service initiated by the terminal. For example, if the terminal is powered off for a long time and then powered on again to initiate an initial registration, the SUPI type is 0 (IMSI).

(2) Home network identifier (home network identifier): The home network identifier identifies the home network of a subscriber. When the SUPI type is the IMSI, the HNI consists of two parts: mobile country code (MCC) and mobile network code (MNC). When the SUPI type is the NSI, the GLI or the GCI, the home network identifier (HNI) includes a string with variable length.

When the SUPI type is the NSI, the GLI or the GCI, the home network identifier is a string with variable length, and this string represents a domain name.

(3) Routing indicator (routing indicator): The routing indicator is allocated by the home network operator and can be used together with the HNI to send network signaling carrying the SUCI to the AUSF or the UDM to serve the subscriber.

(4) Protection scheme identifier (protection scheme identifier): The protection scheme identifier identifies a null scheme (null-scheme) or a non-null scheme (non-null scheme). The non-null scheme is defined by the home network (HPLMN).

(5) Home network public key identifier (home network public key identifier): If a null protection mechanism is used, the value is also set to 0.

(6) Scheme output (scheme output): The scheme output contains a variable-length string, depending on the protection mechanism used.

It can be learned from the structure of the SUCI that the SUCI may include identification information of a home network of the UE. The identification information may be used to: when the UE performs a registration procedure, an AMF in a serving network (serving PLMN) serving the UE selects, based on the home network identifier in the SUCI, an AUSF or a UDM network element in the home network to perform a security authentication procedure on the UE. A reason is that only the home network of the UE has subscription data of the UE. Therefore, it is necessary to select the AUSF and the UDM in the home network to perform the security authentication procedure on the UE.

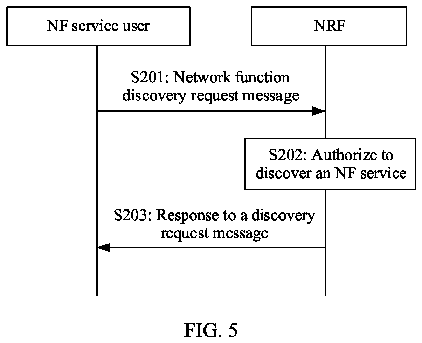

FIG. 5 is a schematic flowchart of discovering a network element in a same network by an NF by using an NRF. As shown in FIG. 5, specific steps are as follows.

S201: A network function service user (NF service consumer) sends a network function discovery request message (Nnrf_NFDiscover_Request) to an NRF.

S202: The NRF authorizes the request message sent in step S201.

S203: If an NF is discovered, a response message includes one or more network function instances (NF instance), network function types (NF type), network function instance identifiers (NF instance ID), fully qualified domain names (Fully Qualified Domain Name, FQDN) of the network function, or IP addresses. If the NF is not discovered, a failure cause is returned, for example, 404 not found, indicating that the requested NF cannot be discovered in the NRF.

### 4. UE registration

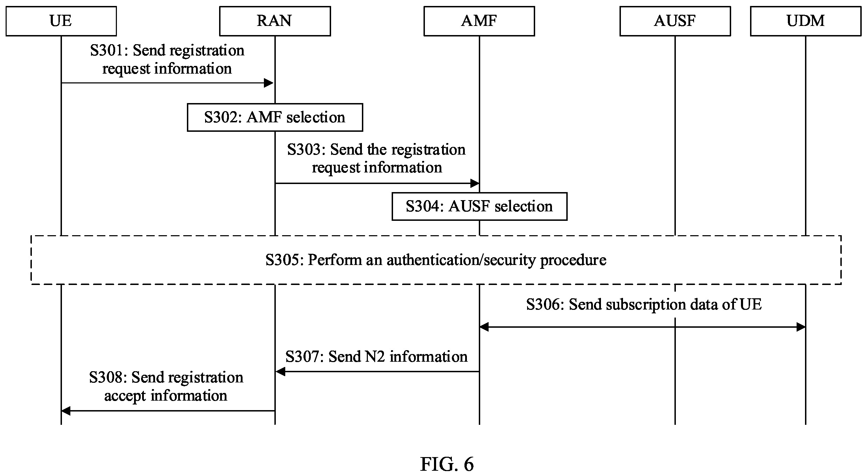

FIG. 6 is a schematic flowchart of UE registration. Specific content is shown in FIG. 6.

S301: An RAN receives registration request information from UE.

It should be understood that when the UE needs to register with a network, the UE sends registration request information, where the registration request information includes a registration type (registration type) and identification information of a terminal device. For example, the identification information of the UE may include one or more of the following information: a globally unique temporary identity (globally unique temporary identity, GUTI), an SUCI, and a permanent equipment identifier (permanent equipment identifier, PEI).

S302: The RAN performs AMF selection.

It should be understood that after receiving the registration request information from the UE, the RAN selects a proper AMF, and sends the registration request information of the UE to the AMF.

S303: The AMF receives the registration request information.

S304: The AMF performs AUSF selection.

Specifically, the AMF selects a proper AUSF to perform a security procedure such as authentication. For a manner in which the AMF selects the AUSF, refer to the foregoing AUSF selection method. The UE, the AMF, the AUSF, and the UDM interact with each other to complete security procedures such as authentication. For 3GPP UE, the authentication procedure is a two-way authentication between the UE and the network.

S305: Perform an authentication or security procedure.

It should be understood that an execution process of the foregoing authentication or security procedure involves interaction between the UE, the AMF, the AUSF, and the UDM.

S306: Obtain subscription data of the UE.

After the UE and the core network element successfully perform mutual authentication, the AMF may interact with the UDM to obtain the subscription data of the terminal device.

S307: The AMF sends N2 information to the RAN.

It should be understood that the N2 information sent by the AMF to the RAN includes non-access stratum (non access stratum, NAS) information, and the NAS information includes registration accept information.

S308: The RAN sends the registration accept information to the UE.

After receiving the registration accept information sent by the AMF, the RAN forwards the registration accept information to the UE. In this way, the UE completes the registration procedure.

Because the internet of things terminal is a terminal device with low power consumption and low complexity, a specific authentication procedure or authentication algorithm needs to be used.

Based on the foregoing problem, this application provides a communication method. According to the solutions of this application, an internet of things terminal is enabled to access a core network to perform a security authentication procedure, thereby improving communication reliability.

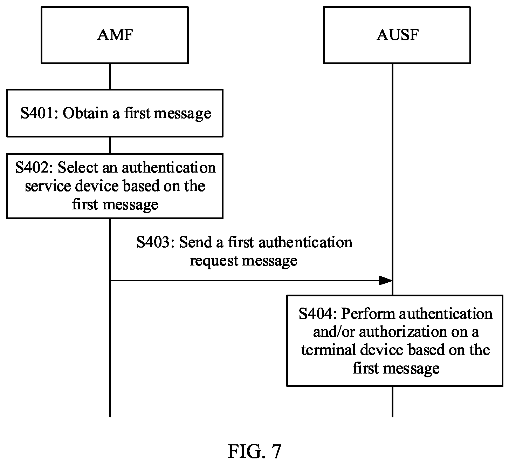

FIG. 7 shows a communication method 400 according to this application. The method is described by using an example in which an authentication service device is an AUSF and a mobility management device is an AMF. In a possible implementation, in this application, the mobility management device may be replaced with a functional device configured to perform internet of things device management or service processing, for example, a tag management function (tag management function, TMF), an ambient internet of things function (ambient IoT function, AIoTF), or an ambient internet of things management function (AIoTMF). A device name does not constitute a limitation on a function of the device. In a future communication system, some or all of the foregoing network elements may still use these names, or may use other names. This is uniformly described herein. The method may include the following steps.

S401: An AMF obtains a first message.

The first message includes identification information of a terminal device, the first message indicates a device type of the terminal device, and the terminal device accesses a network by using an internet of things access technology.

In a possible embodiment, the internet of things may be specifically an ambient internet of things (for example, ambient IoT), an ambient power-enabled internet of things (for example, ambient power-enabled IoT), or a passive internet of things (for example, passive IoT).

In a possible embodiment, the first message includes device type information, and the device type information indicates that the terminal device is an internet of things device, an ambient internet of things device, an ambient power-enabled internet of things device, or a passive internet of things device.

In a possible embodiment, the first message includes device type information, and the device type information indicates that the terminal device is an active terminal or a passive terminal.

In a possible embodiment, the first message may include indication information, where the indication information indicates that the terminal device is the internet of things device, or the indication information indicates that the terminal device accesses a network by using the internet of things access technology, or the indication information indicates that the terminal device is a device corresponding to the internet of things service. For example, the internet of things service may be understood as an ambient internet of things service (for example, ambient IoT service), an ambient power-enabled internet of things service (for example, ambient power-enabled IoT service), or a passive internet of things service (for example, passive IoT service). In a possible implementation, the indication information may be access technology type information (for example, radio access technology type, RAT type).

S402: The AMF selects an AUSF based on the first message.

This step may further include: The AMF determines, based on the first message, that the terminal device is the internet of things device.

In a possible implementation, the AMF may indicate, by using a terminal device identifier (for example, a device ID), that is, a format, a construction, or the like of the identification information, that the terminal device is the internet of things device.

In another possible implementation, the AMF determines, based on the device type information in the first message, that the terminal device is the internet of things device. Further, the AMF may further determine that the terminal device is the active device or the passive device. For example, the AMF may determine, based on the identification information, that the terminal device is the active device or the passive device. For another example, the AMF may determine, based on subscription data or configuration information, that the terminal device is the active device or the passive device.

In another possible implementation, the AMF determines, based on the indication information in the first message, that the terminal device is the internet of things device. For example, the AMF may determine, based on the access technology type information in the first message, that the terminal device is the internet of things device, or determine that the terminal device uses the internet of things access technology.

S403: The AMF sends a first authentication request message to the AUSF.

The first authentication request message includes identification information of the terminal device, and the first authentication request message is used to request to perform authorization and/or authentication on the terminal device.

The first authentication request message includes the identification information of the terminal device.

In a possible embodiment, the first authentication request message may include indication information, where the indication information indicates that the terminal device is the internet of things device, or the indication information indicates that the terminal device accesses a network by using an internet of things access technology, or the indication information indicates that the terminal device is a terminal device corresponding to the internet of things service.

S404: The AUSF performs authorization and/or authentication on the terminal device based on the first message.

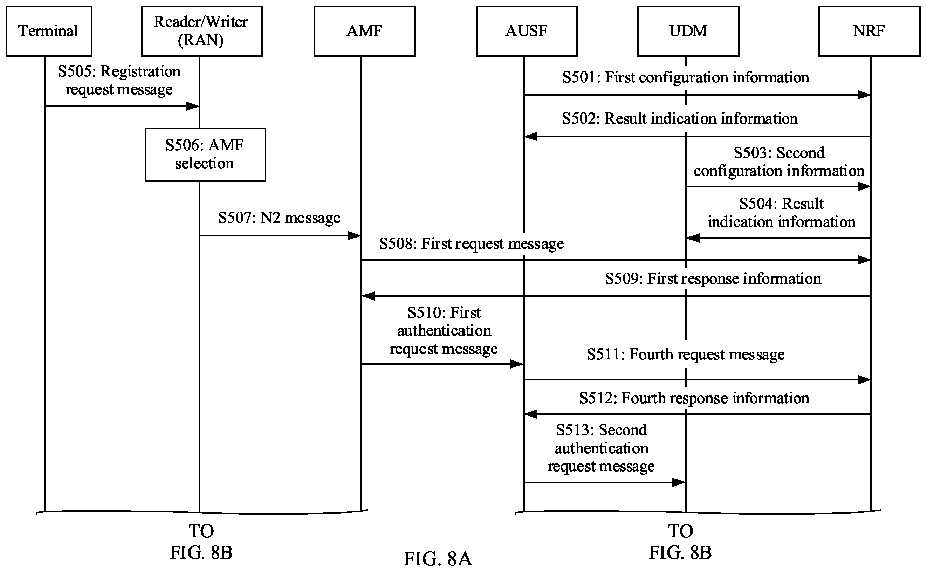

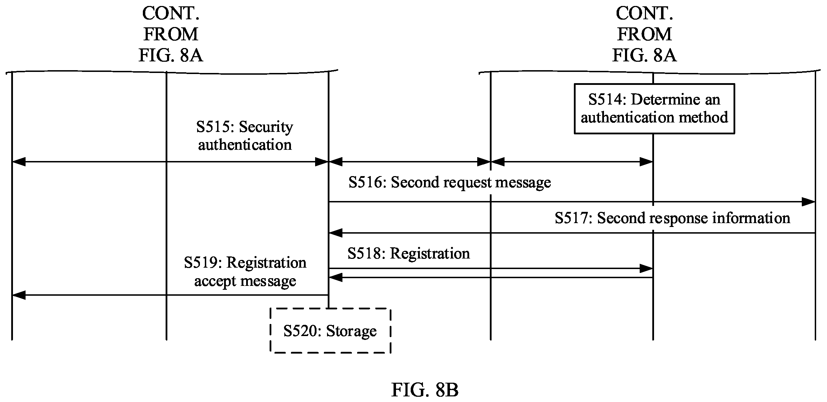

FIG. 8A and FIG. 8B show a communication method 500 according to this application. This method is described by using an example in which an authentication service device is an AUSF, a network repository device is an NRF, a mobility management device is an AMF, and a unified data management device is a UDM. A device name does not constitute a limitation on a function of the device. The device may be understood as a corresponding function. Unless otherwise specified, the device and the function may be interchanged. In a future communication system, some or all of the foregoing network elements may still use these names, or may have other names. This is uniformly described herein, and details are not described again in the following methods 600 to 800. The method may include the following steps.

S501: An AUSF sends first configuration information (for example, a profile or an NF profile) to an NRF.

The first configuration information includes at least one of the following: a first support group identifier, first support information, and first support type information, where the first support group identifier indicates the first service requester, the first support group identifier may also be expressed as a first group identifier, and the first group identifier indicates a supported service requester. Alternatively, the first group identifier may indicate that the AUSF supports performing authorization and/or authentication on an internet of things device of the service requester corresponding to the first group identifier, or the first group identifier may indicate that the AUSF supports performing authorization and/or authentication on the internet of things device corresponding to the first group identifier. The first support information indicates whether authorization and/or authentication on the internet of things device is supported, or the first support information indicates that authorization and/or authentication on the internet of things device is supported. The first support type information may also be expressed as first type information, where the first type information indicates a device type that supports authorization and/or authentication, or the first type information may indicate that the AUSF supports performing authorization and/or authentication on the device type indicated by the first type information.

For example, the first configuration information may include one or more of the following information: a network function type (network function type, NF type), identification information (for example, an NF instance ID), a fully qualified domain name FQDN of a network function, an IP address, and a network identifier (for example, a PLMN ID or a PLMN ID+NID). The network function type may be indicated as an authentication service function (for example, an AUSF). The identification information may be an identifier of the authentication service function, the FQDN is an FQDN of the authentication service function, and the IP address is an IP address of the authentication service function. The network identifier may indicate a network in which the authentication service function is located or a network to which the authentication service function belongs/serves.

In a possible implementation, the first configuration information may include indication information (the indication information indicates that the ambient IoT is supported), one or more supported owner IDs, and a supported device type (for example, the active terminal and/or the passive terminal).

The indication information may indicate that authentication or authorization of the ambient internet of things terminal is supported, or may be used to indicate an authentication/authentication algorithm or procedure of the ambient internet of things terminal.

The one or more supported owner IDs (that is, the first support group identifier) represent that an authorization/authentication procedure of one or more terminals (internet of things terminal) corresponding to the one or more owner IDs is supported.

The owner ID may be replaced with a group identifier or identification information indicating the service requester. The identification information indicating the service requester may be a service requester identifier, a user identifier (User ID), an enterprise identifier (enterprise ID), a third-party identifier (the third party ID), or an owner identifier (owner ID). The service requester identifier, the user identifier, the enterprise identifier, the third-party identifier, or the owner identifier is an implementation of the identification information indicating the service requester. In actual application, another identifier may indicate the identifier of the service requester. The operation requester may be referred to as a service requester or a third party, and may be a server, an application function, or another device that instructs to perform an operation instruction. In embodiments of this application, the operation requester may be understood as a device that sends an operation instruction. For example, the operation requester may be a server/an ambient IoT server/a passive IoT server/an AF/another device that sends an operation instruction. The operation requester may correspond to a specific type of user, and the specific type of user may include an enterprise, a tenant, a third party, or a company. This is not limited in this application. That the operation requester corresponds to the specific type of user may be understood as that the operation requester belongs to the specific type of user and is managed by the specific type of user.

The supported device type (for example, the active terminal and/or the passive terminal, or one or more of device types A, B, and C) may be used to indicate a terminal type that supports performing authorization and/or authentication; the supported device type (for example, the active terminal and/or the passive terminal, or one or more of device types A, B, and C) may be used to indicate that authorization and/or authentication are/is performed on the terminal type; or the supported device type (for example, the active terminal and/or the passive terminal, or one or more of device types A, B, and C) may be used to indicate that an authentication/authorization algorithm procedure corresponding to the terminal type is supported.

In a possible implementation, the AUSF sends the first configuration information by using an Nnrf_NFManagement_NFRegister Request or an Nnrf_NFManagement_NFUpdate Request.

S502: The NRF sends result indication information (for example, an Nnrf_NFManagement _NFRegister Response or an Nnrf_NFManagement_NFUpdate Response) to the AUSF.

For example, after successfully obtaining the first configuration information, the NRF may send, to the AUSF, result indication information indicating that the operation succeeds.

S503: The UDM sends second configuration information (for example, a profile or an NF profile) to the NRF.

Different from step S501, the network function type NF type is an NF type indicating the UDM, and provides identification information of the UDM, a fully qualified domain name FQDN of a network function, an IP address, and a network identifier (for example, a PLMN ID or a PLMN ID+NID) rather than related information of the AUSF. The network function type may be indicated as unified data management (for example, UDM). The identification information may be an identifier of the unified data management, the FQDN is an FQDN of the unified data management, and the IP address is an IP address of the unified data management. The network identifier may indicate a network in which the unified data management is located or a network to which the unified data management belongs/serves.

The second configuration information includes at least one of the following: a second support group identifier, second support information, and second support type information, where the second support group identifier indicates the second service requester, the second support group identifier may also be expressed as a second group identifier, and the second group identifier indicates a service requester supported by the UDM. Alternatively, the second group identifier may indicate that the UDM supports subscription data of an internet of things device that manages a service requester corresponding to the second group identifier, or the second group identifier may indicate that the UDM supports subscription data of an internet of things device corresponding to the second group identifier. The second support information indicates whether the UDM supports authorization and/or authentication of the internet of things device. The second support type information may also be expressed as second type information, where the second type information indicates a device type that supports authorization and/or authentication, or the first type information may indicate that the AUSF supports performing authorization and/or authentication on the device type indicated by the second type information.

For a message for providing information, refer to step S501.

S504: The NRF sends result indication information to the UDM.

For a message for providing the result indication information, refer to step S502.

S505: After the terminal device successfully initiates random access, the terminal device sends a second message (for example, a registration request message) to the reader (for example, a RAN).

In a possible implementation, the internet of things terminal sends an AS message (access stratum message) to the reader/writer, where the AS message includes the second message (for example, a registration request message). In other words, the second message (for example, the registration request message) is an NAS message.

In a possible implementation, the second message may include a device identifier (for example, a device ID) and device type information, for example, device type information indicating an active terminal (for example, the active device) or the passive terminal (for example, a passive device). The active terminal may indicate that the terminal supports active communication and/or energy storage. The passive terminal may indicate that the terminal does not support active communication. Alternatively, the device type information indicates a device A, a device B, or a device C. The device A may indicate that the terminal does not support energy storage and/or does not support active communication. The device B may indicate that the terminal supports energy storage and/or does not support active communication. The device C may indicate that the terminal supports energy storage and/or active communication. In a possible implementation, that the terminal supports active communication may be understood as supporting generation of a carrier or supporting recovery of a carrier. In another possible implementation, that the terminal does not support active communication may be understood as supporting passive communication, or may be understood as that the terminal needs to depend on an external excitation source or an external carrier source to perform communication. In a possible implementation, the device type information indicates a first-type device or a second-type device. The first-type device does not support active communication, or the first-type device needs to perform uplink data transmission by relying on an external carrier. The second-type device supports active communication, or the second-type device does not need to perform uplink data transmission by relying on an external carrier. For example, that the terminal supports active communication may be understood as supporting carrier generation or supporting carrier recovery.

S506: The reader (for example, the RAN) selects an AMF.

The RAN determines that the device that sends the registration request message is the internet of things terminal, and selects a proper AMF.

For example, the RAN may determine that the internet of things terminal accesses the network by using an access technology type of the ambient IoT, and then select an AMF that supports the ambient IoT.

S507: The RAN sends a first message to the AMF.

The first message may include a second message, the first message includes identification information of the terminal device (for example, the first message includes the second message, and the second message includes the identification information of the terminal device), and the first message indicates a device type of the terminal device.

In a possible embodiment, the RAN may send, to the AMF, information indicating that the terminal is the internet of things terminal (or the internet of things terminal) or information indicating that the terminal is the ambient IoT (that is, the first message includes an indication message). In another possible implementation, the RAN may send, to the AMF, information indicating that the access technology type is the ambient IoT. The information may be used by the AMF to determine that the terminal is the internet of things terminal (or the internet of things terminal), and select an AUSF that supports authentication/authorization of the terminal. Alternatively, the AMF may determine, based on the information sent by the RAN, that the terminal is the internet of things terminal, and select an AUSF that supports authentication/authorization of the terminal.

S508: The AMF sends a first request message (for example, Nnrf_NFDiscovery Request) to the NRF.

The AMF determines, based on the first message, that the terminal device is the ambient IoT device, and selects the AUSF that supports authentication/authorization of the ambient IoT device. The AMF determines that the terminal device is the ambient IoT device in the following manners.

Manner 1: The AMF determines the terminal device as the ambient IoT device based on the ambient IoT indication information or the access technology type sent by the RAN, that is, the indication information in the first message (step S507).

Manner 2: The AMF determines the terminal device as the ambient IoT device based on the device type sent by the internet of things terminal. For example, the device type may be specifically an active device or a passive device, or the device type may be a device A, a device B, or a device C. The device A may represent that the terminal does not support energy storage and/or does not support active communication. The device B may represent that the terminal supports energy storage and/or does not support active communication. The device C may represent that the terminal supports energy storage and/or active communication. In a possible implementation, that the terminal supports active communication may be understood as supporting generation of a carrier or supporting recovery of a carrier. In another possible implementation, that the terminal does not support active communication may be understood as supporting passive communication, or may be understood as that the terminal needs to depend on an external excitation source or an external carrier source to perform communication. In a possible implementation, the device type information indicates a first-type device or a second-type device. The first-type device does not support active communication, or the first-type device needs to perform uplink data transmission by relying on an external carrier. The second-type device supports active communication, or the second-type device does not need to perform uplink data transmission by relying on an external carrier. For example, that the terminal supports active communication may be understood as supporting carrier generation or supporting carrier recovery. For example, the first message includes the identification information and the device type information.

Manner 3: The AMF determines the terminal device as the ambient IoT device based on the identification information (device ID) sent by the internet of things terminal.

In a possible implementation, a format, a structure, and the like of the device ID may be indicated as the ambient IoT device.

In another possible implementation, the device ID includes identification information (for example, a group identifier owner ID) indicating the service requester, and the AMF selects the AUSF based on the owner ID. The group identifier indicates the service requester. The group identifier may be an identifier of the service requester, or there may be a correspondence between the group identifier and the identifier of the service requester.

In another possible implementation, the device ID includes information indicating a device type of the internet of things terminal. For example, the device ID includes a field indicating an active device or a passive device.

The first request message includes at least one of the following: a group identifier, indication information, and device type information, where the group identifier indicates a service requester corresponding to the terminal device, the indication information indicates that the terminal device is an internet of things device, and the device type information indicates that the terminal device is an active terminal or a passive terminal. The group identifier may indicate the service requester, or the group identifier may indicate that the selected AUSF needs to support authorization and/or authentication performed on the internet of things device of the service requester corresponding to the group identifier, or the group identifier may indicate that the selected AUSF needs to support authorization and/or authentication performed on the internet of things device corresponding to the group identifier. The indication information indicates that the selected AUSF needs to support authorization and/or authentication of the internet of things device. Alternatively, the indication information indicates that the selected AUSF needs to support an authentication/authorization algorithm procedure of the internet of things device. The active terminal may indicate that the terminal supports active communication and/or energy storage. The passive terminal may indicate that the terminal does not support active communication. Alternatively, the device type information indicates a device A, a device B, or a device C. The device A may indicate that the terminal does not support energy storage and/or does not support active communication. The device B may indicate that the terminal supports energy storage and/or does not support active communication. The device C may indicate that the terminal supports energy storage and/or active communication. In a possible implementation, that the terminal supports active communication may be understood as supporting generation of a carrier or supporting recovery of a carrier. In another possible implementation, that the terminal does not support active communication may be understood as supporting passive communication, or may be understood as that the terminal needs to depend on an external excitation source or an external carrier source to perform communication.

In a possible implementation, in this application, the passive terminal may be interchangeably used with a passive device, the first-type terminal, the device A, or the device B. In another possible implementation, in this application, the active terminal may be interchangeably used with the active device, the second-type terminal, or the device C.

In a possible implementation, the first request message is determined based on the first message; or the AMF may determine the first request message based on the first message. For example, the first request message may include one or more of the following information: NF type information indicating the AUSF, an owner ID, information indicating the ambient IoT, and a device type (for example, may be specifically an active device/passive device), so that the NRF selects the AUSF based on the information.

S509: The NRF sends first response information to the AMF.

The first response information includes AUSF information. In a possible implementation, the AUSF supports performing authorization and/or authentication on a terminal device corresponding to the service requester indicated by the group identifier in the first request message, or the AUSF supports performing authorization and/or authentication on a terminal device indicated by the indication information in the first request message as an internet of things device, or the AUSF supports performing authorization and/or authentication on the terminal device indicated by the device type information in the first request message as the active terminal or the passive terminal.

For example, the information may be AUSF identification information (AUSF instance ID), an FQDN, an IP address, or the like.

S510: The AMF sends a first authentication request message to the AUSF fed back in step S509.

The first authentication request message includes a device identifier (device ID).

In a possible embodiment, the first authentication request message may include information indicating the ambient IoT and/or device type information. The information indicating the ambient IoT may be displayed indication information, for example, an ambient IoT Indication/Indicator, or may be indicating the ambient IoT by using a message name/message type (for example, Nausf_AmbientIoT_Authentication Request). The device type information may be displayed device type information, for example, an internet of things device (ambient IoT device), an active terminal (for example, an active device), or a passive terminal (for example, a passive device). The active terminal may indicate that the terminal supports active communication and/or energy storage. The passive terminal may indicate that the terminal does not support active communication. Alternatively, the device type information indicates a device A, a device B, or a device C. The device A may indicate that the terminal does not support energy storage and/or does not support active communication. The device B may indicate that the terminal supports energy storage and/or does not support active communication. The device C may indicate that the terminal supports energy storage and/or active communication. In a possible implementation, that the terminal supports active communication may be understood as supporting generation of a carrier or supporting recovery of a carrier. In another possible implementation, that the terminal does not support active communication may be understood as supporting passive communication, or may be understood as that the terminal needs to depend on an external excitation source or an external carrier source to perform communication.

In a possible embodiment, some fields in the device ID may be used for indication.

In a possible embodiment, the AMF may send the owner ID to the AUSF, or the AUSF may obtain the owner ID based on the device ID.

In another possible embodiment, the AMF may determine the device type based on a field indicating the device type in the device ID, and send the device type information to the AUSF.

S511: The AUSF sends a second request message (for example, an Nnrf_NFDiscovery Request) to the NRF.

The second request message includes at least one of the following: identification information, a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal. The group identifier may indicate a service requester, or the group identifier may indicate that the selected UDM needs to support authorization and/or authentication on an internet of things device of the service requester corresponding to the group identifier, and also needs to support management of subscription data of the internet of things device of the service requester corresponding to the group identifier. Alternatively, the group identifier may indicate that the selected UDM needs to support authorization and/or authentication on the internet of things device corresponding to the group identifier, and also needs to support management of subscription data of the internet of things device corresponding to the group identifier. The indication information indicates that the selected UDM needs to support authorization and/or authentication of the internet of things device, and/or needs to support management of subscription data of the internet of things device. Alternatively, the indication information indicates that the selected UDM needs to support an authentication/authorization algorithm procedure of the internet of things device, and/or needs to support a procedure of managing subscription data of the internet of things device.

The active terminal may indicate that the terminal supports active communication and/or energy storage. The passive terminal may indicate that the terminal does not support active communication. Alternatively, the device type information indicates a device A, a device B, or a device C. The device A may indicate that the terminal does not support energy storage and/or does not support active communication. The device B may indicate that the terminal supports energy storage and/or does not support active communication. The device C may indicate that the terminal supports energy storage and/or active communication. In a possible implementation, that the terminal supports active communication may be understood as supporting generation of a carrier or supporting recovery of a carrier. In another possible implementation, that the terminal does not support active communication may be understood as supporting passive communication, or may be understood as that the terminal needs to depend on an external excitation source or an external carrier source to perform communication.

For example, the second request message may include one or more of the following information: NF type information indicating the UDM, an owner ID, information indicating the ambient IoT, and a device type (for example, may be specifically an active device/passive device), so that the NRF selects the UDM based on the information.

The AUSF determines that the device is the ambient IoT device, and selects the UDM that supports authentication/authorization of the ambient IoT device. The AUSF determines that the device is the ambient IoT device in the following manners.

Manner 1: The AUSF determines that the device is the ambient IoT device based on the ambient IoT indication information, the access technology type, or the device type information (step S510) sent by the AMF. The device type may be specifically the active device (for example, the active device) or the passive device (for example, the passive device).

Manner 2: The AUSF determines that the device is the ambient IoT device based on a device identifier (device ID) sent by the internet of things terminal.

In a possible implementation, a format, a structure, and the like of the device ID may be indicated as the ambient IoT device.

In another possible implementation, the device ID includes identification information (for example, an owner ID) indicating the service requester, and the AUSF selects the UDM based on the owner ID.

In another possible implementation, the device ID includes information indicating a device type of the internet of things terminal. For example, the device ID includes a field indicating an active device or a passive device.

The AUSF may learn, based on the foregoing several implementations, one or more of the following information: the ambient IoT access technology type/device, the device type of the active/passive device, the owner ID, and the like.

S512: The NRF sends second response information to the AUSF.

The second response information includes UDM information. In a possible implementation, the UDM supports performing authorization and/or authentication on a terminal device corresponding to the service requester indicated by the group identifier in the second request message, the UDM supports performing authentication and/or authorization on the terminal device that is indicated by the indication information in the second request message as the internet of things device, or the UDM supports performing authorization and/or authentication on a terminal device whose device type information in the second request message indicates the active terminal or the passive terminal. In another possible implementation, the UDM supports management of the subscription data of the terminal device corresponding to the service requester indicated by the group identifier in the second request message, the UDM supports management of subscription data of the terminal device indicated by the indication information in the second request message as the internet of things device, or the UDM supports management of subscription data of the terminal device whose device type information in the second request message indicates the active terminal or the passive terminal.

For example, the information may be the UDM identification information (UDM instance ID), the FQDN, the IP address, and the like.

S513: The AUSF sends a second authentication request message (for example, Nudm_UEAuthentication_Get Request) to the UDM determined in step S512.

The second authentication request message is used to determine an authentication method, and the authentication method is used to perform authorization and/or authentication on the terminal device.

The second authentication message may include a device identifier (Device ID), an owner ID, ambient IoT indication information, a device type, and the like.

S514: The UDM may obtain subscription data based on the device identifier, and determine an authentication method based on the subscription data.

In a possible implementation, the subscription data stored by the UDM is not at a device granularity, that is, may be at a service requester granularity (that is, the subscription data is obtained based on the owner ID), or may be at a service type (or access technology type) granularity, that is, the subscription data is obtained based on the indication information of the ambient IoT; or may be at a device type granularity, that is, the subscription data is obtained based on the active/passive device.

Alternatively, the subscription data may be obtained by using a combination of the foregoing several types of information as a granularity. For example, the subscription data is obtained by using a service requester and a device type as a granularity. For example, for a same service requester, different device types correspond to different authentication methods or key information, and terminals of a same device type have same information such as an authentication method and a key. For example, the subscription data may be a context (mutually replaced).

S515: Perform a security authentication procedure between the network and the internet of things terminal.

In a possible implementation, the authentication procedure may be performed between the terminal device, the AMF, the AUSF, and the UDM.

S516: The AMF sends a request message to the NRF.

After the internet of things terminal is successfully authenticated, the AMF needs to register itself with the UDM as the AMF serving the internet of things terminal.

The AMF discovers the UDM by using the NRF. A discovery manner is shown in step S511. A difference lies in that a network function that sends a request is the AMF, and the device ID may be a decrypted device ID. Details are not described herein again.

S517: The NRF sends, to the AMF, information about a UDM supporting a capability, for example, UDM identification information (UDM instance ID), an FQDN, and an IP address.

S518: The AMF registers itself with the UDM as an AMF serving the internet of things terminal.

The AMF provides a globally unique AMF identifier (globally unique AMF identifier, GUAMI) to the UDM.

In a possible embodiment, the AMF may send AUSF information to the UDM, so that the UDM stores the AUSF information that supports execution of the security procedure of the internet of things terminal, so that in a subsequent case in which mobility exists, a new AMF may obtain, by using the information stored by the UDM, the AUSF information that supports execution of the security procedure.

S519: The AMF sends a registration accept message to the internet of things terminal.

The message may include a temporary identifier (5G globally unique temporary identity, 5G-GUTI) allocated by the AMF.

In a possible embodiment, the method 500 may further include the following.

S520: The AMF may store the selected AUSF and UDM information in a context, so that when a new AMF subsequently serves the internet of things terminal, the information may be sent to a target AMF by using a context migration or context transmission procedure, so that the target AMF can select the AUSF and the UDM based on the information. The foregoing NRF discovery procedure does not need to be performed again, thereby reducing signaling overheads.

In the method 500, capability information, service requester information, device type information, or the like corresponding to the internet of things device is added to network element selection and network element configuration information, so that the selected network element indicates a security procedure of the terminal.

According to the solution of this application, the core network device may select network elements such as the AUSF and the UDM based on an NRF discovery mechanism, so that the selected AUSF and the UDM support execution of the security procedure on the internet of things terminal, thereby avoiding that the selected AUSF or UDM does not support the security procedure of the terminal, and causing an authentication failure and a failure to access the network.

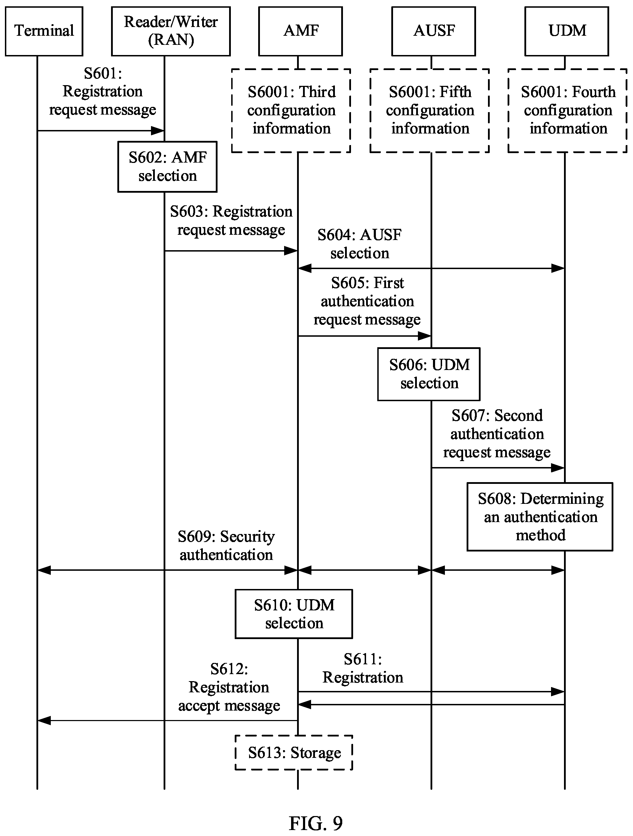

FIG. 9 shows a communication method 600 according to this application. The method may include the following steps.

S6001: An AMF obtains third configuration information, where the third configuration information includes a correspondence between authentication service device information and at least one of the following: a first support group identifier, first support information, and first support type information, where the first support group identifier indicates the first service requester, the first support group identifier may also be expressed as a first group identifier, and the first group identifier indicates a supported service requester. Alternatively, the first group identifier may indicate that the AUSF supports performing authorization and/or authentication on an internet of things device of the service requester corresponding to the first group identifier, or the first group identifier may indicate that the AUSF supports performing authorization and/or authentication on the internet of things device corresponding to the first group identifier. The first support information indicates whether authorization and/or authentication on the internet of things device is supported, or the first support information indicates that authorization and/or authentication on the internet of things device is supported. The first support type information may also be expressed as first type information, where the first type information indicates a device type that supports authorization and/or authentication, or the first type information may indicate that the AUSF supports performing authorization and/or authentication on the device type indicated by the first type information.

For example, the AMF is configured with a correspondence between one or more of the following information and the AUSF information: (1) information (for example, an owner ID) indicating a service requester; (2) support for authentication of an ambient IoT device; and (3) a supported device type, for example, an active/passive device. The AUSF information may include an AUSF identifier (for example, an AUSF instance ID), an FQDN, or an IP address.

In a possible embodiment, the AMF is further configured with a correspondence between one or more of the following information and the UDM information: (1) information indicating a service requester (for example, an owner ID); (2) support for authentication of an ambient IoT device; and (3) a supported device type, for example, an active/passive device. The UDM information may include a UDM identifier (for example, a UDM instance ID), an FQDN, or an IP address.

The AUSF obtains fifth configuration information, where the fifth configuration information includes a correspondence between unified data management device information and at least one of the following: a second support group identifier, second support information, and second support type information, where the second support group identifier indicates the second service requester, the second support group identifier may also be expressed as a second group identifier, and the second group identifier indicates a service requester supported by the UDM. Alternatively, the second group identifier may indicate that the UDM supports subscription data of an internet of things device that manages a service requester corresponding to the second group identifier, or the second group identifier may indicate that the UDM supports subscription data of an internet of things device corresponding to the second group identifier. The second support information indicates whether the UDM supports authorization and/or authentication of the internet of things device. The second support type information may also be expressed as second type information, where the second type information indicates a device type that supports authorization and/or authentication, or the first type information may indicate that the AUSF supports performing authorization and/or authentication on the device type indicated by the second type information.

For example, the AUSF may be configured with a correspondence between one or more of the following information and the UDM information: (1) information (for example, an owner ID) indicating a service requester; (2) support for authentication of an ambient IoT device; and (3) a supported device type, for example, an active/passive device. The UDM information may include a UDM identifier (for example, a UDM instance ID), an FQDN, or an IP address.

The UDM obtains fourth configuration information, where the fourth configuration information includes a correspondence between authentication service device information and at least one of the following: a first support group identifier, first support information, and first support type information, where the first support group identifier indicates the first service requester, the first support group identifier may also be expressed as a first group identifier, and the first group identifier indicates a supported service requester. Alternatively, the first group identifier may indicate that the AUSF supports performing authorization and/or authentication on an internet of things device of the service requester corresponding to the first group identifier, or the first group identifier may indicate that the AUSF supports performing authorization and/or authentication on the internet of things device corresponding to the first group identifier. The first support information indicates whether authorization and/or authentication on the internet of things device is supported, or the first support information indicates that authorization and/or authentication on the internet of things device is supported. The first support type information may also be expressed as first type information, where the first type information indicates a device type that supports authorization and/or authentication, or the first type information may indicate that the AUSF supports performing authorization and/or authentication on the device type indicated by the first type information.

For example, the UDM may be configured with a correspondence between one or more of the following information and the AUSF information or the UDM information: (1) information (for example, an owner ID) indicating a service requester; (2) support for authentication of an ambient IoT device; and (3) a supported device type, for example, an active/passive device.

In a possible implementation, the correspondence configured by the UDM is not at a non-terminal device granularity. The correspondence may be used by the AMF to subsequently obtain information such as AUSF information when requesting subscription data or configuration information from the UDM (referring to the description in step 604).

S601: After a terminal device successfully initiates random access, the terminal device sends a registration request message to an RAN.

S602: The RAN determines that the device sending the message is an internet of things terminal, and selects a proper AMF.

S603: The RAN sends the registration request message from the internet of things terminal to the AMF.

For the foregoing steps, refer to the descriptions of S505 to S507 in the method 500. Details are not described herein again.

S604: The AMF determines that the AMF is an ambient IoT device, and selects an AUSF that supports authentication/authentication of the ambient IoT device.

For a manner in which the AMF determines that the device is the ambient IoT device, refer to the description in S508.

In a possible implementation, the AMF selects the AUSF based on the third configuration information (as described in step S6001).

For example, the AMF selects the AUSF based on information (for example, an owner ID) that indicates a service requester in the identification information (for example, a device ID) of the terminal device and a correspondence in the third configuration information; or selects the AUSF based on information such as a device type and an ambient IoT access technology type and a correspondence. The AUSF supports performing authorization and/or authentication on the terminal device corresponding to the service requester indicated by the group identifier, the AUSF supports performing authorization and/or authentication on the terminal device indicated by the indication information as the internet of things device, or the AUSF supports performing authorization and/or authentication on a terminal device indicated by the device type information as the active terminal or the passive terminal.

In another possible implementation, the AMF interacts with the UDM to obtain a proper AUSF from the UDM. The AMF sends a third request message to the UDM, where the third request message is used to select the authentication service device, and the third request message includes at least one of the following: identification information, a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal. The group identifier may indicate the service requester, or the group identifier may indicate that the selected AUSF needs to support authorization and/or authentication performed on the internet of things device of the service requester corresponding to the group identifier, or the group identifier may indicate that the selected AUSF needs to support authorization and/or authentication performed on the internet of things device corresponding to the group identifier. The indication information indicates that the selected AUSF needs to support authorization and/or authentication of the internet of things device. Alternatively, the indication information indicates that the selected AUSF needs to support an authentication/authorization algorithm procedure of the internet of things device. The active terminal may indicate that the terminal supports active communication and/or energy storage. The passive terminal may indicate that the terminal does not support active communication. Alternatively, the device type information indicates a device A, a device B, or a device C. The device A may indicate that the terminal does not support energy storage and/or does not support active communication. The device B may indicate that the terminal supports energy storage and/or does not support active communication. The device C may indicate that the terminal supports energy storage and/or active communication. In a possible implementation, that the terminal supports active communication may be understood as supporting generation of a carrier or supporting recovery of a carrier. In another possible implementation, that the terminal does not support active communication may be understood as supporting passive communication, or may be understood as that the terminal needs to depend on an external excitation source or an external carrier source to perform communication.

For example, the AMF sends a request message to the UDM, where the request message includes one or more of a device ID (or information indicating a service requester, for example, an owner ID), ambient IoT indication information, and a device type (for example, may be specifically an active device/passive device). The UDM selects a proper AUSF based on the fourth configuration information (for example, the example in step S6001) and the request message sent by the AMF, and sends AUSF information (for example, an AUSF identifier, an FQDN, and an IP address) to the AMF.

S605: The AMF sends a first authentication request message (for example, Nausf_UEAuthentication_Authentication Request) to the selected AUSF.

The first authentication request message includes a device identifier (device ID).

In a possible embodiment, the first authentication request message may include information indicating the ambient IoT and/or device type information. The information indicating the ambient IoT may be displayed indication information, for example, an ambient IoT Indication/Indicator, or may be indicating the ambient IoT by using a message name/message type (for example, Nausf_AmbientIoT_Authentication Request). The device type information may be displayed device type information, for example, an internet of things device (ambient IoT device), an active terminal (for example, an active device), or a passive terminal (for example, a passive device). The active terminal may indicate that the terminal supports active communication and/or energy storage. The passive terminal may indicate that the terminal does not support active communication. Alternatively, the device type information indicates a device A, a device B, or a device C. The device A may indicate that the terminal does not support energy storage and/or does not support active communication. The device B may indicate that the terminal supports energy storage and/or does not support active communication. The device C may indicate that the terminal supports energy storage and/or active communication. In a possible implementation, that the terminal supports active communication may be understood as supporting generation of a carrier or supporting recovery of a carrier. In another possible implementation, that the terminal does not support active communication may be understood as supporting passive communication, or may be understood as that the terminal needs to depend on an external excitation source or an external carrier source to perform communication.

In a possible embodiment, the AMF may send the owner ID to the AUSF, or the AUSF may obtain the owner ID based on the device ID.

In another possible implementation, the AMF may determine the device type based on a field indicating the device type in the device ID, and send the device type information to the AUSF.

S606: The AUSF determines that the device is the ambient IoT device, and selects a UDM that supports authentication/authorization of the ambient IoT device or a UDM that supports management of subscription data of the internet of things device.

For a manner in which the AUSF determines that the device is an ambient IoT device, refer to the description in S511. Details are not described herein again.

The AUSF may learn, based on the foregoing several manners, one or more of the following information: the ambient IoT access technology type/device, the device type of the active/passive device, the owner ID, and the like. The AUSF selects the UDM based on the fifth configuration information. For example, the AUSF selects the UDM based on information (for example, the owner ID) indicating the service requester in the device ID and a correspondence in the fifth configuration information, or selects the UDM based on information such as a device type and an ambient IoT access technology type and a correspondence.

S607: The AUSF sends a second authentication request message (for example, Nudm_UEAuthentication_Get Request) to the UDM determined in step S606.

The second authentication message may include at least one of the following: a device identifier (Device ID), an owner ID, ambient IoT indication information, a device type, and the like.

S608: The UDM may obtain subscription data based on the device identifier, and determine an authentication method based on the subscription data.

In another possible implementation, the subscription data stored in the UDM is not at a device granularity, that is, the subscription data may be obtained at a service requester granularity (that is, the subscription data is obtained based on the owner ID), may be obtained at a service type (or access technology type) granularity (that is, the subscription data is obtained based on the indication information of the ambient IoT), or may be obtained at a device type granularity (that is, the subscription data is obtained based on the active/passive device). Alternatively, the subscription data may be obtained based on a combination of the foregoing several types of information. For example, the subscription data is obtained based on the service requester and the device type. For example, for a same service requester, different device types correspond to different authentication methods or key information, and information such as authentication methods and keys of terminals of a same device type is the same. For example, the subscription data may be a context (mutually replaced).

S609: Perform a security authentication procedure between the network and the internet of things terminal.

In a possible implementation, the authentication procedure may be performed by using the ambient IoT device, the AMF, the AUSF, and the UDM.

S610: The AMF discovers the UDM based on third configuration information.

After the internet of things terminal is successfully authenticated, the AMF needs to register itself with the UDM as the AMF serving the internet of things terminal. A discovery manner is similar to that in step S604.

S611: The AMF registers itself with the UDM as an AMF serving the internet of things terminal.

The AMF provides a GUAMI to the UDM, and optionally, may provide AUSF information, so that the UDM stores the AUSF information that supports execution of a security procedure of the internet of things terminal, so that in a subsequent case in which mobility exists, a new AMF may obtain, by using the information stored by the UDM, the AUSF information that supports execution of the security procedure.

S612: The AMF sends a registration accept message to the internet of things terminal.

The message may include a temporary identifier (5G globally unique temporary identity, 5G-GUTI) allocated by the AMF.

In a possible embodiment, the method 600 may further include the following.

S613: The AMF may store the selected AUSF and UDM information in a context, so that when a new AMF subsequently serves the internet of things terminal, the information may be sent to a target AMF by using a context migration or context transmission procedure, so that the target AMF can select the AUSF and the UDM based on the information. The foregoing NRF discovery procedure does not need to be performed again, thereby reducing signaling overheads.

According to the solution of this application, information used to select a network element is separately configured on the AMF, the AUSF, and the UDM, so that the network element can select another core network device that supports the security procedure of the ambient internet of things terminal. In this way, the network elements do not need to dynamically execute a request by using the NRF, thereby reducing signaling overheads.

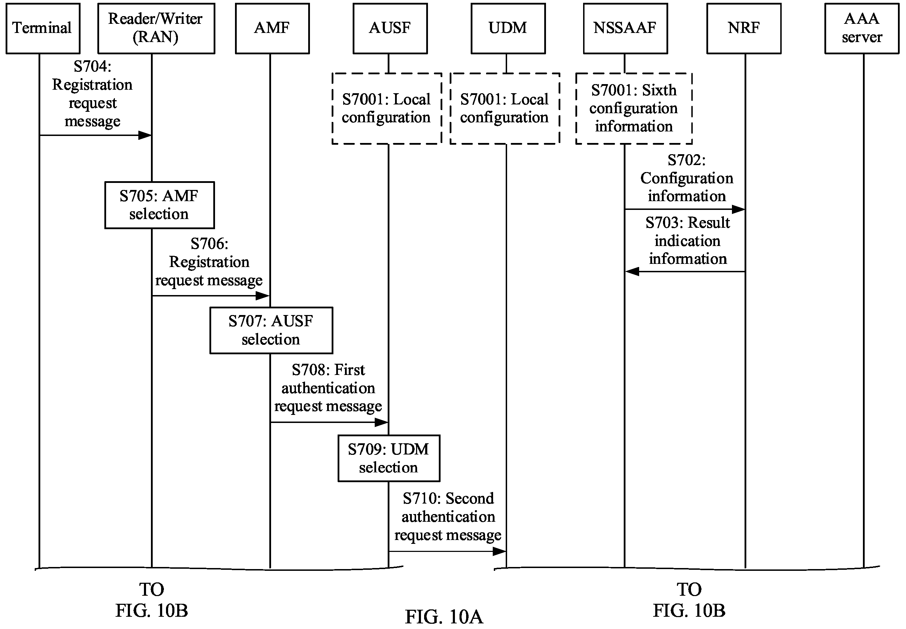

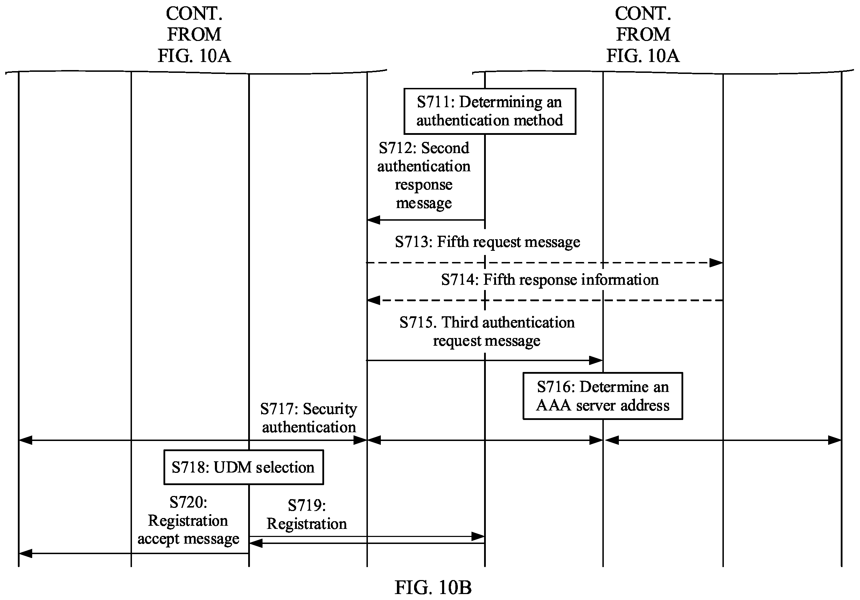

FIG. 10A and FIG. 10B show a communication method 700 according to this application. The method may include the following steps.

S7001: An AUSF obtains sixth configuration information, where the sixth configuration information includes at least one of the following: a third support group identifier, third support information, and third support type information, the third support group identifier indicates a third service requester, the third support group identifier may also be expressed as a third group identifier, and the third group identifier indicates a supported service requester. Alternatively, the third group identifier may indicate that the NSSAAF supports authorization and/or authentication on an internet of things device of a service requester corresponding to the third group identifier, or the third group identifier may indicate that the NSSAAF supports authorization and/or authentication on an internet of things device corresponding to the third group identifier. The third support information indicates whether the NSSAAF supports authorization and/or authentication on the internet of things device, the third support type information may also be expressed as third type information, and the third type information indicates a device type that supports authorization and/or authentication, or the third type information may indicate that the NSSAAF supports authorization and/or authentication on a device type indicated by the third type information.

For example, the AUSF is configured with a correspondence between two or more of the following information: (1) information (for example, an owner ID) indicating a service requester; (2) AAA server information (for example, a domain name or an address); and (3) NSSAAF information (for example, an identifier, an FQDN, or an IP address). The AAA server information may include an AAA server identifier, an FQDN, or an IP address. The NSSAAF information may include an NSSAAF identifier, an FQDN, or an IP address. The NSSAAF may be an NSSAAF that supports interaction with the AAA server or an NSSAAF that supports interaction with a specific AAA server.

The UDM is configured with a correspondence between two or more of the following information: (1) information (for example, an owner ID) indicating a service requester; (2) AAA server information (for example, a domain name or an address); and (3) NSSAAF information (for example, an identifier, an FQDN, or an IP address). The AAA server information may include an AAA server identifier, an FQDN, or an IP address. The NSSAAF information may include an NSSAAF identifier, an FQDN, or an IP address. The NSSAAF may be an NSSAAF that supports interaction with the AAA server or an NSSAAF that supports interaction with the specific AAA server.

The NSSAAF may be configured with a correspondence between two or more of the following information: (1) information (for example, an owner ID) indicating a service requester; (2) AAA server information (for example, a domain name or an address); and (3) NSSAAF information (for example, an identifier, an FQDN, or an IP address). The AAA server information may include the AAA server identifier, the FQDN, or the IP address.

S702: The NSSAAF sends sixth configuration information (for example, an Nnrf_NFManagement_NFRegister Request or an Nnrf_NFManagement_NFUpdate Request) to the NRF.

The sixth configuration information may include one or more of the following information: a network function type (network function type, NF type), identification information (for example, an NF instance ID), an FQDN, an IP address, and a network identifier (for example, a PLMN ID or a PLMN ID+NID). The network function type may be indicated as an authentication and authorization function (for example, an NSSAAF) of a specific network slice. The identification information may be an identifier of the NSSAAF, the FQDN is an FQDN of the NSSAAF, and the IP address is an IP address of the NSSAAF. The network identifier may indicate a network in which the NSSAAF is located or a network to which the NSSAAF belongs/serves.

In a possible implementation, the sixth configuration information may include information indicating that Ambient IoT is supported, one or more supported owner IDs, a supported device type (for example, a passive device and/or an active device), and AAA server information.

The information indicating that the ambient IoT is supported may indicate that authentication or authorization of the ambient internet of things terminal is supported, or may be used to indicate an authentication/authentication algorithm or procedure of the ambient internet of things terminal.

The one or more supported owner IDs represent that the authentication/authentication procedure of one or more terminals (internet of things terminals) corresponding to the one or more owner IDs is supported. The owner ID may be replaced with identification information indicating the service requester.

The AAA server information includes an AAA server identifier, a domain name (for example, an FQDN), or an IP address.

S703: The NRF sends result indication information (for example, an Nnrf_NFManagement _NFRegister Response or an Nnrf_NFManagement_NFUpdate Response) to the NSSAAF.

For example, after successfully obtaining the information, the NRF may send, to the NSSAAF, result indication information indicating that the operation succeeds.

S704: After a terminal device successfully initiates random access, the terminal device sends a registration request message to an RAN.

S705: The RAN determines that the device sending the message is an internet of things terminal, and selects a proper AMF.

S706: The RAN sends the registration request message from the internet of things terminal to the AMF.

S707: The AMF determines that the AMF is an ambient IoT device, and selects an AUSF that supports authentication/authentication of the ambient IoT device.

S708: The AMF sends a first authentication request message to the selected AUSF.

S709: The AUSF determines that the device is the ambient IoT device, and selects a UDM that supports authentication/authorization of the ambient IoT device.

S710: The AUSF sends a second authentication request message to the UDM determined in step S709.

S711: The UDM may obtain subscription data based on the device identifier, and determine an authentication method based on the subscription data.

For the foregoing steps, refer to steps S601 to S608 in the method 600. Details are not described herein again.

S712: The UDM sends a second authentication response message (for example, Nudm_UEAuthentication_Get Response) to the AUSF.

The second authentication response message may include a device identifier (for example, a decrypted identifier) and indication information indicating that the AAA server performs authentication. Optionally, the second authentication response message may include NSSAAF information (for example, NSSAAFs that can interact with the AAA server) and AAA server information.

S713: The AUSF discovers the NSSAAF by using the NRF, and the AUSF sends a fifth request message (for example, Nnrf_NFDiscovery Request) to the NRF.

In a possible implementation, if the response message sent by the UDM in step S712 does not include the NSSAAF information, the AUSF discovers the NSSAAF by using the NRF. The authentication service device sends a fifth request message to a network repository device, where the fifth request message is used to request to discover an NSSAAF, the fifth request message is determined based on the first authentication request message, and the fifth request message includes at least one of the following: a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal. The group identifier may indicate the service requester, or the group identifier may indicate that the selected NSSAAF needs to support authorization and/or authentication performed on the internet of things device of the service requester corresponding to the group identifier, or the group identifier may indicate that the selected AUSF needs to support authorization and/or authentication performed on the internet of things device corresponding to the group identifier. The indication information indicates that the selected NSSAAF needs to support authorization and/or authentication of the internet of things device. Alternatively, the indication information indicates that the selected NSSAAF needs to support an authentication/authorization algorithm procedure of the internet of things device. The active terminal may indicate that the terminal supports active communication and/or energy storage. The passive terminal may indicate that the terminal does not support active communication. Alternatively, the device type information indicates a device A, a device B, or a device C. The device A may indicate that the terminal does not support energy storage and/or does not support active communication. The device B may indicate that the terminal supports energy storage and/or does not support active communication. The device C may indicate that the terminal supports energy storage and/or active communication. In a possible implementation, that the terminal supports active communication may be understood as supporting generation of a carrier or supporting recovery of a carrier. In another possible implementation, that the terminal does not support active communication may be understood as supporting passive communication, or may be understood as that the terminal needs to depend on an external excitation source or an external carrier source to perform communication.

For example, the AUSF sends a fifth request message to the NRF, where the fifth request message may include one or more of the following information: NF type information indicating the NSSAAF, an owner ID, information indicating the ambient IoT, and a device type (for example, may be specifically an active device/passive device), so that the NRF selects the NSSAAF based on the information.

S714: The NRF sends fifth response information to the AUSF.

The fifth response information includes at least one of the following: NSSAAF information, AAA server information, and the like. The NSSAAF information may include an NSSAAF identifier (for example, an NSSAAF instance ID), an FQDN, an IP address, and the like. The AAA server information may include an AAA server identifier, an FQDN, an IP address, and the like. In a possible implementation, the NSSAAF supports performing authorization and/or authentication on the terminal device corresponding to the service requester indicated by the group identifier in the fifth request message, the NSSAAF supports performing authorization and/or authentication on the terminal device indicated by the indication information in the fifth request message as the internet of things device, or the NSSAAF supports performing authorization and/or authentication on the terminal device indicated by the device type information in the fifth request message as the active terminal or the passive terminal.

In another possible implementation, if the response message sent by the UDM in step S712 includes the NSSAAF information, the AUSF may interact with the NSSAAF based on the information (that is, step S713 and S714 may not be performed).

S715: The AUSF sends a third authentication request message (for example, NSSAAF_AIWF_Authentication Request) to the NSSAAF.

In a possible embodiment, the third authentication request message may include a device identifier (for example, a decrypted device ID), ambient IoT indication information, and a device type (for example, a passive/active device). Optionally, the third authentication request message may include AAA server information.

In a possible embodiment, the AAA server address may be from the second authentication response message sent by the UDM in step S712, or may be configured in the AUSF, that is, the information configured in step S7001. The AUSF determines a corresponding AAA server address based on the NSSAAF information or the owner ID information.

In another possible embodiment, the AAA server address may be from the fifth response message sent by the NRF. The AUSF sends the AAA server information to the NSSAAF.

S716: The NSSAAF determines an AAA server address.

In a possible implementation, if the AUSF does not send the AAA server information to the NSSAAF, the NSSAAF may determine the AAA server based on the sixth configuration information.

In another possible implementation, if the AUSF sends the AAA server information to the NSSAAF in step S715, the NSSAAF may determine the AAA server information based on the information from the AUSF.

S717: Perform a security authentication procedure between the network and the internet of things terminal.

In a possible implementation, the authentication procedure may be performed by using the ambient IoT device, the AMF, the AUSF, the NSSAAF, and the AAA server.

S718: After the internet of things terminal is successfully authenticated, the AMF needs to register itself with the UDM as the AMF serving the internet of things terminal.

The AMF discovers the UDM based on the configuration information. The discovery manner may be local configuration (for example, step S606 in the method 600) or discovery through the NRF (for example, steps S516 and S517 in the method 500).

S719: The AMF registers itself with the UDM as an AMF serving the internet of things terminal.

The AMF provides a GUAMI to the UDM, and optionally, may provide AUSF information, so that the UDM stores the AUSF information that supports execution of a security procedure of the internet of things terminal, so that in a subsequent case in which mobility exists, a new AMF may obtain, by using the information stored by the UDM, the AUSF information that supports execution of the security procedure.

S720: The AMF sends a registration accept message to the internet of things terminal.

The message may include a temporary identifier (for example, a 5G globally unique temporary identity, 5G-GUTI) allocated by the AMF. Optionally, the AMF may store the selected AUSF and UDM information in the context, so that when a new AMF subsequently serves the internet of things terminal, the information may be sent to the target AMF by using a context transfer or context transmission procedure, so that the target AMF can select the AUSF and the UDM based on the information. The foregoing NRF discovery procedure does not need to be performed again, thereby reducing signaling overheads.

When the internet of things terminal cannot use an identifier format of username@realm, the internet of things terminal may obtain the address of the AAA server based on the configuration information or by using the NRF, to complete the security procedure of the terminal.

According to the solution of this application, AAA server information may be configured on a network element such as an AUSF, a UDM, an NSSAAF, or an NRF, so that when an internet of things terminal uses a new ID, the internet of things terminal can interact with the AAA server to complete a security procedure of the internet of things terminal.

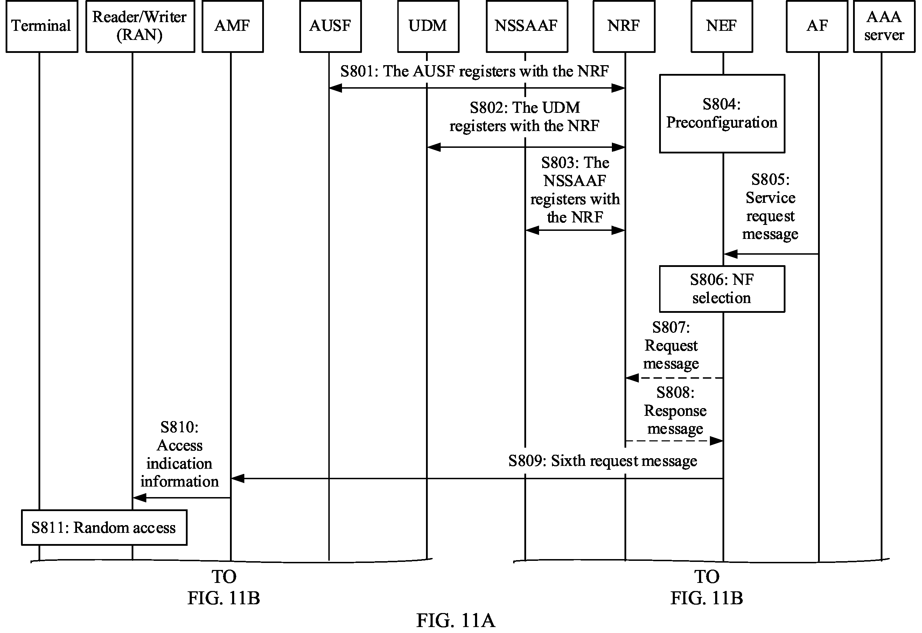

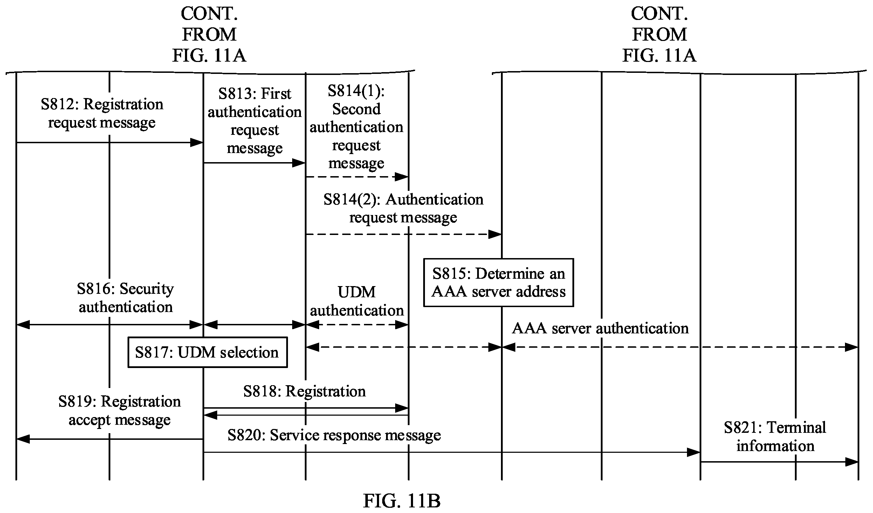

FIG. 11A and FIG. 11B show a communication method 800 according to this application. The method may include the following steps.

S801: An AUSF may send first configuration information to an NRF according to step S501 and step S502 in the method 500.

S802: A UDM may send the second configuration information to the NRF according to step S503 and step S504 in the method 500.

S803: An NSSAAF may send sixth configuration information to the NRF according to step S702 and step S703 in the method 700.

S804: An NEF performs configuration.

In a possible embodiment, the NEF may configure a correspondence between two or more of the following information: (1) AF information (which may be understood as a service requester); (2) a device ID; (3) an owner ID (or information indicating a service requester); (4) AMF information; (5) AUSF information; (6) UDM information; (7) NSSAAF information; and (8) AAA server information.

The AF information may include an AF identifier, an AF domain name (for example, an FQDN of the AF), and AF address information (for example, an IP address). The AMF information may include an AMF identifier, an AMF domain name (for example, an FQDN of the AMF), and AMF address information (for example, an IP address). The AUSF information may include an AUSF identifier, an AUSF domain name (for example, an FQDN of the AUSF), and AUSF address information (for example, an IP address). The UDM information may include a UDM identifier, a UDM domain name (for example, an FQDN of the UDM), and UDM address information (for example, an IP address). The NSSAAF information may include an NSSAAF identifier, an NSSAAF domain name (for example, an FQDN of the NSSAAF), and NSSAAF address information (for example, an IP address). The AAA server information may include an AAA server identifier, an AAA server domain name (for example, an FQDN of the AAA server), and AAA server address information (for example, an IP address).

S805: A service requester (for example, the AF) sends a service request message (for example, Nnef_AmbientIoT_Service Request) to the NEF.

The service request message may include AF information (for example, an AF identifier, an AF address, or an AF FQDN), a service type (for example, inventory, read, write, deactivation, or positioning), location information (which may be used to determine that a reader (for example, a RAN) performs a service operation), a device ID (range) (an optional parameter, and if the device ID is not carried, it may represent that a service operation is performed on all internet of things terminals that belong to the service requester in a specific range), and AAA server information (an optional parameter, and may be carried when the AAA server performs a security procedure).

S806: The NEF performs network function (NF) selection based on the service request sent by the AF.

In a possible implementation, the NEF selects one or more NFs. For example, the NEF may select, based on the information configured in step S804, the AUSF and the UDM that correspond to the AF (service requester). If the AAA server needs to perform a security procedure, the NEF may select the NSSAAF and/or the AAA server. If the NEF is not configured with the configuration information in step S804, the NEF may discover the NF through the NRF in the following steps S807 and S808.

S807: The NEF sends a request message to the NRF.

The request message is used to request to discover at least one network function corresponding to the service requester, and the network function is used to perform a service operation on at least one terminal device.

The request message may include a type of one or more NFs that need to be discovered, for example, one or more of an NSSAAF, an AUSF, and a UDM. The request message may include a device ID (range), ambient IoT indication information, and a device type (for example, a passive/active device), so that the NRF sends, to the NEF, an NF corresponding to the service request. The type of the NF may indicate a type of a network element that needs to be discovered to perform a service operation on the terminal device. The device ID indicates the terminal device that performs the service operation. The ambient IoT indication information indicates that the selected NF needs to support authorization and/or authentication of the IoT device. Alternatively, the indication information indicates that the selected NF needs to support an authentication/authorization algorithm procedure of the IoT device. The active terminal may indicate that the terminal supports active communication and/or energy storage. The passive terminal may indicate that the terminal does not support active communication. Alternatively, the device type information indicates a device A, a device B, or a device C. The device A may indicate that the terminal does not support energy storage and/or does not support active communication. The device B may indicate that the terminal supports energy storage and/or does not support active communication. The device C may indicate that the terminal supports energy storage and/or active communication. In a possible implementation, that the terminal supports active communication may be understood as supporting generation of a carrier or supporting recovery of a carrier. In another possible implementation, that the terminal does not support active communication may be understood as supporting passive communication, or may be understood as that the terminal needs to depend on an external excitation source or an external carrier source to perform communication.

In another possible implementation, when the NEF needs to discover a plurality of NFs, the NEF may separately perform step S807 and step S808 for a plurality of times to discover different types of NFs.

S808: The NRF sends corresponding NF information to the NEF based on the request message.

The NF information may include an identifier, an FQDN, or an IP address of the NF.

In a possible implementation, the NF message may include a network function type (network function type, NF type), identification information (for example, an NF instance ID), a fully qualified domain name FQDN of a network function, an IP address, and a network identifier (for example, a PLMN ID or a PLMN ID+NID). For example, the network function type may be indicated as an authentication service function (for example, an AUSF). The identification information may be an identifier of the authentication service function, the FQDN is an FQDN of the authentication service function, and the IP address is an IP address of the authentication service function. The network identifier may indicate a network in which the authentication service function is located or a network to which the authentication service function belongs/serves. For another example, the network function type may be indicated as a unified data management function (for example, UDM). The identification information may be an identifier of the unified data management function, the FQDN is an FQDN of the unified data management function, and the IP address is an IP address of the unified data management function. The network identifier may indicate a network in which the unified data management function is located or a network to which the unified data management function belongs/serves. For another example, the network function type may be indicated as an authentication and authorization function of a specific network slice (for example, an NSSAAF). The identification information may be an identifier of the NSSAAF, the FQDN may be an FQDN of the NSSAAF, and the IP address may be an IP address of the NSSAAF. The network identifier may indicate a network in which the NSSAAF is located or a network to which the NSSAAF belongs or serves.

S809: The NEF sends a sixth request message to the AMF.

The sixth request message includes network function information, and the network function information includes identification information and/or address information of at least one of the following network functions: an authentication service device, a unified data management device, a network slice specific authentication and authorization function NSSAAF, and an AAA server.

In a possible implementation, the NEF determines a corresponding AMF based on the location information. The service request message sent to the AMF may include the AF information, the service type, and location information. Optionally, the service request message may include NF information discovered by the NEF in steps S806 to S808, for example, one or more of AUSF information, UDM information, NSSAAF information, and AAA server information, so that the AMF does not need to perform NF selection after the internet of things terminal subsequently accesses the network, but the NF is pre-selected by the NEF.

In a possible implementation, if a function that supports execution of an ambient internet of things service transmission is used to perform service processing (for example, processing a service request message/information from a service requester, performing a procedure related to the ambient internet of things service, performing access management, security authentication, data transmission, instruction transmission, or performing internet of things terminal management on the internet of things terminal), the NEF may select the network function, and the network function sends the request message to the AMF. In a possible implementation, the function may be interconnected with an access network device, which is equivalent to that the access network device has an interface with the function, or may interact with a RAN by using an AMF. From a perspective of deployment, this function may be co-deployed with the AMF. If the function can be directly interconnected with the RAN, step 810 may be replaced with that the function sends, to the reader (RAN), information indicating to trigger random access of the internet of things terminal.

S810: The AMF sends, to the reader (RAN), information indicating that random access of the internet of things terminal is triggered.

For example, the random access indication information is sent to the RAN by using an N2 message, to trigger the RAN to initiate a random access procedure of the internet of things terminal. Optionally, the information may include information used to indicate a range of internet of things terminals participating in random access, for example, MASK. The MASK indicates an identifier range of internet of things terminals that need to participate in random access (which may be understood as a prefix of the identifier, and a terminal that meets the identifier prefix needs to participate in the random access procedure).

S811: The internet of things terminal initiates the random access procedure.

S812: After the internet of things terminal successfully initiates random access, the internet of things terminal sends a registration request message to the RAN.

In a possible implementation, the internet of things terminal sends an AS message (access stratum message) to the reader/writer, where the AS message includes the registration request message, that is, the registration request message is a NAS message.

In a possible implementation, the registration request message may include a device identifier (for example, a device ID) and device type information, for example, device type information indicating the active device or the passive device. The RAN sends the registration request message from the internet of things terminal to the AMF.

S813: The AMF sends a first authentication request message (for example, Nausf_UEAuthentication_Authentication Request) to the selected AUSF.

The AMF selects the AUSF that supports authentication/authorization of the ambient IoT device.

In a possible implementation, if the AMF receives the AUSF information from the NEF in step S809, the AMF selects the AUSF based on the information.

The first authentication request message includes a device identifier (device ID). Optionally, the first authentication request message may include information indicating the ambient IoT device and/or the device type information. The information indicating the ambient IoT device may be explicit indication information, for example, an ambient IoT indication/indicator, or may be indicated by using a message name/message type as an ambient IoT (for example, Nausf_AmbientIoT_Authentication Request). The device type information may be explicit device type information, for example, an internet of things device (Ambient IoT device), an active terminal (for example, an active device), or a passive terminal (for example, a passive device). The active terminal may indicate that the terminal supports active communication and/or energy storage. The passive terminal may indicate that the terminal does not support active communication. Alternatively, the device type information indicates a device A, a device B, or a device C. The device A may indicate that the terminal does not support energy storage and/or does not support active communication. The device B may indicate that the terminal supports energy storage and/or does not support active communication. The device C may indicate that the terminal supports energy storage and/or active communication. In a possible implementation, that the terminal supports active communication may be understood as supporting generation of a carrier or supporting recovery of a carrier. In another possible implementation, that the terminal does not support active communication may be understood as supporting passive communication, or may be understood as that the terminal needs to depend on an external excitation source or an external carrier source to perform communication.

In another possible implementation, the AMF may determine the device type based on a field indicating the device type in the device ID, and send the device type information to the AUSF. In another possible implementation, if the AMF receives one or more of the UDM, the NSSAFF, and the AAA server information from the NEF in step S809, the AMF may send the one or more of the UDM, the NSSAFF, and the AAA server information to the AUSF.

S814: The AUSF sends a second authentication request message.

In a possible implementation, if the AUSF does not receive the NSSAAF information in step S813 (for example, the security procedure is performed by the AUSF/UDM), when determining that the device is the ambient IoT device, the AUSF selects a UDM that supports authentication/authorization of the ambient IoT device.

In a possible embodiment, the AUSF may discover the UDM by using the NRF (for example, steps S511 and S512 in the method 500), or the AUSF selects the UDM based on the configuration information (for example, as described in step S6001 in the method 600). For example, the AUSF selects the UDM based on information (for example, an owner ID) indicating a service requester in the device ID and a correspondence in the configuration information; or selects the UDM based on information such as a device type and an ambient IoT access technology type and a correspondence.

The AUSF sends the second authentication request message to the UDM, and the second authentication request message may include one or more of information such as the device ID, the ambient IoT indication information, and the device type.

In another possible implementation, if the AUSF receives the NSSAAF information from the AMF (for example, the security procedure is performed by the AAA server), the AUSF may directly interact with the NSSAAF to send an authentication request message (for example, Nnssaaf_AIWF_Authentication Request), without interacting with the UDM. When the AUSF receives the AAA server information from the AMF, the AUSF may send the AAA server information to the NSSAAF.

S815: Determine an address of the AAA server.

If step S814 is that the AUSF sends the authentication request message to the NSSAAF, the NSSAAF may obtain address information of the AAA server in the following manners.

Manner 1: AAA server information is received from the AUSF in step S814.

Manner 2: The AAA server information is configured in the method 700.

S816: Perform a security authentication procedure between the network and the internet of things terminal.

In a possible implementation, the authentication procedure may be performed by using the ambient IoT device, the AMF, the AUSF, the NSSAAF, and the AAA server (if the AAA server needs to perform the security procedure).

In another possible implementation, the authentication procedure may be performed by using the ambient IoT device, the AMF, the AUSF, and the UDM.

S817: The AMF selects the UDM.

After the internet of things terminal is successfully authenticated, the AMF needs to register itself with the UDM as the AMF serving the internet of things terminal. The AMF discovers the UDM based on the third configuration information.

S818: The AMF registers itself with the UDM as an AMF serving the internet of things terminal.

The AMF provides a GUAMI to the UDM, and optionally, may provide AUSF information, so that the UDM stores the AUSF information that supports execution of a security procedure of the internet of things terminal, so that in a subsequent case in which mobility exists, a new AMF may obtain, by using the information stored by the UDM, the AUSF information that supports execution of the security procedure.

S819: The AMF sends a registration accept message to the internet of things terminal, where the message may include a temporary identifier (for example, a 5G globally unique temporary identity, 5G-GUTI) allocated by the AMF. Optionally, the AMF may store the selected AUSF and UDM information in the context, so that when a new AMF subsequently serves the internet of things terminal, the information may be sent to the target AMF by using a context transfer or context transmission procedure, so that the target AMF can select the AUSF and the UDM based on the information. The foregoing NRF discovery procedure does not need to be performed again, thereby reducing signaling overheads.

S820: The AMF may send information (for example, an identifier and stored data) from one or more internet of things terminals to the NEF.

In a possible embodiment, the information is sent by using an Namf_AmbientIoT_service response message.

S821: The NEF sends the information (for example, an identifier and stored data) about the internet of things terminal to the AF (service requester).

In a possible embodiment, the information is sent by using an Nnef_AmbientIoT_Service response message.

When the access procedure of the internet of things terminal is triggered by the service requester, network elements involved in the subsequent procedure may be determined in advance, for example, determined by the NEF. Therefore, when the AMF subsequently receives a registration request (or an access request) from the internet of things terminal, the AMF may directly select a proper network element to execute the procedure based on network element information provided by the NEF. Therefore, an entire 5GC does not need to perform enhancement and function upgrade, and only the NEF needs to be enhanced to perform network element selection, thereby reducing required new configurations.

According to the solutions of this application, the core network can perform optimization and adaptation for NF selection in an access procedure of an internet of things terminal, so that the core network device can select a proper NF to perform a security procedure based on a service request or a feature and capability of the internet of things terminal.

It should be understood that sequence numbers of the foregoing processes do not mean execution sequences in various embodiments of this application. The execution sequences of the processes should be determined based on functions and internal logic of the processes, and should not be construed as any limitation on implementation processes of embodiments of this application. Any sequence arrangement in which a function of each step can be implemented should fall within the protection scope of this application.

It should be understood that the foregoing embodiments may be implemented separately, or may be implemented in combination based on functions and internal logic of steps in the foregoing embodiments.

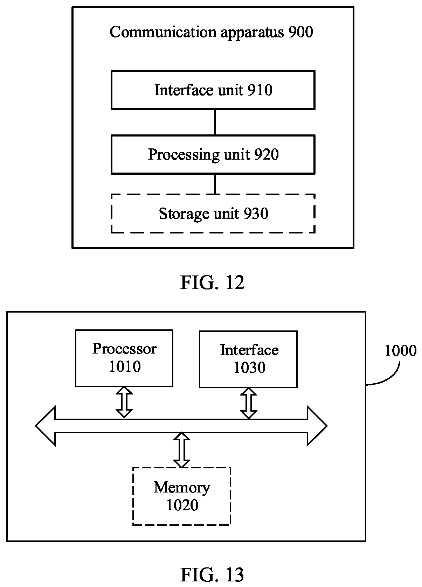

According to the foregoing method, FIG. 12 is a diagram of a communication apparatus 900 according to an embodiment of this application.

As shown in FIG. 12, the apparatus 900 may include modules or units that are in a one-to-one correspondence with the methods/operations/steps/actions described in the method 500 to the method 800. The modules or units may be implemented by using a hardware circuit, software, or a combination of a hardware circuit and software. In a possible implementation, the apparatus may include an interface unit 910 and a processing unit 920.

In a possible design, the apparatus 900 may correspond to the mobility management device in the foregoing embodiments.

In a possible embodiment, the apparatus 900 includes: an interface unit 910, configured to obtain a first message, where the first message includes identification information of a terminal device, the first message indicates a device type of the terminal device, and the terminal device accesses a network by using an internet of things access technology; a processing unit 920, configured to select an authentication service device based on the first message, where the authentication service device supports authorization and/or authentication on the device that accesses the network by using the internet of things access technology; and the interface unit 910 is further configured to send a first authentication request message to the authentication service device, where the first authentication request message includes the identification information of the terminal device, and the first authentication request message is used to request to perform authorization and/or authentication on the terminal device.

In a possible implementation, the first message includes device type information and/or indication information, the device type information indicates that the terminal device is an active terminal or a passive terminal, the indication information indicates that the terminal device is an internet of things device, and the mobility management device determines, based on the first message, that the terminal device is the internet of things device; and the processing unit 920 is configured to: determine, based on the first message, that the terminal device is an internet of things device, and select the authentication service device that supports authorization and/or authentication on the internet of things device.

In a possible implementation, the interface unit 910 is configured to send a first request message to a network repository device based on the first message, where the first request message is used to request to discover the authentication service device, and the first request message includes at least one of the following: a group identifier, the indication information, and the device type information, where the group identifier indicates a service requester corresponding to the terminal device, the indication information indicates that the terminal device is the internet of things device, and the device type information indicates that the terminal device is the active terminal or the passive terminal; the interface unit 910 is further configured to obtain first response information from the network repository device, where the first response information includes identification information and/or address information of the authentication service device; and the processing unit 920 is configured to select the authentication service device based on the first response information.

In a possible implementation, the first response information is determined based on the first request message and first configuration information of the authentication service device, where the first configuration information includes at least one of the following: a first support group identifier, first support information, and first support type information, the first support group identifier corresponds to the first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication.

In a possible implementation, the interface unit 910 is further configured to send a second request message to a network repository device, where the second request message is used to request to discover a unified data management device, and the second request message includes at least one of the following: identification information, a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal; the interface unit 910 is further configured to obtain second response information from the network repository device, where the second response information includes identification information and/or address information of the unified data management device; and the processing unit 920 is further configured to determine the unified data management device based on the second response information.

In a possible implementation, the second response information is determined based on second request information and second configuration information of the unified data management device, where the second configuration information includes at least one of the following: a second support group identifier, second support information, and second support type information, the second support group identifier indicates that the second service requester is supported, the unified data management device supports management of subscription data of a terminal device corresponding to the second service requester, the second support information indicates whether management of subscription data of an internet of things device is supported, and the second support type information indicates a device type corresponding to the terminal device that is supported by the unified data management device and that manages the subscription data.

In a possible implementation, the processing unit 920 is configured to select the authentication service device based on the first message and third configuration information, where the third configuration information includes a correspondence between authentication service device information and at least one of the following: a first support group identifier, first support information, and first support type information, the first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication.

In a possible implementation, the interface unit 910 is configured to send a third request message to a unified data management device, where the third request message is used to select the authentication service device, and the third request message includes at least one of the following: identification information, a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal; the interface unit 910 is further configured to obtain third response information from the unified data management device, where the third response information includes identification information and/or address information of the authentication service device; and the processing unit 920 is configured to select the authentication service device based on the third response information.

In a possible implementation, the third response information is determined based on the third request information and fourth configuration information. The fourth configuration information includes a correspondence between the authentication service device information and at least one of the following: the first support group identifier, the first support information, and the first support type information, where the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

In a possible implementation, the processing unit 920 is configured to select the unified data management device based on the first message and the third configuration information, where the third configuration information includes a correspondence between unified data management device information and at least one of the following: a second support group identifier, second support information, and second support type information, the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

In a possible implementation, the interface unit 910 is configured to send a registration request message to the unified data management device, where the registration request message includes identification information of the mobility management device and the identification information and/or the address information of the authentication service device, and the registration request message indicates the mobility management device and the authentication service device that serve the terminal device.

In a possible implementation, the apparatus 900 may further include a storage unit 930, configured to store the identification information of the authentication service device and/or the identification information of the unified data management device.

In a possible implementation, the interface unit 910 is configured to obtain a sixth request message from a network exposure function, where the sixth request message includes network function information, and the network function information includes identification information and/or address information of at least one of the following devices: the authentication service device, a unified data management device, a network slice specific authentication and authorization function NSAAF, and an AAA server; and the processing unit 920 is configured to select the authentication service device and/or the unified data management device based on the first message and the sixth request message.

In a possible implementation, the first authentication request message includes device type information and/or indication information, the device type information indicates that the terminal device is an active terminal or a passive terminal, the indication information indicates that the terminal device is an internet of things device, and the processing unit 920 is configured to select the terminal device as the internet of things device based on the first authentication request message.

The interface unit 910 in the communication apparatus 900 performs receiving and sending operations performed by the mobility management device in the foregoing method embodiments, and the processing unit 920 performs an operation other than the receiving and sending operations.

In a possible design, the apparatus 900 may correspond to the authentication service device in the foregoing embodiments.

In a possible embodiment, the apparatus 900 includes an interface unit 910, configured to receive a first authentication request message from a mobility management device, where the first authentication request message includes identification information of a terminal device, the first authentication request message is used to request to perform authorization and/or authentication on the terminal device, and the terminal device accesses a network by using an internet of things access technology.

In a possible implementation, the processing unit 920 is configured to determine a unified data management device based on the first authentication request message, where the unified data management device supports authorization and/or authentication on a device that accesses the network by using the internet of things access technology; and the interface unit 910 is configured to send a second authentication request message to the unified data management device, where the second authentication request message is used to determine an authentication method, and the authentication method is used to perform authorization and/or authentication on the terminal device.

In a possible implementation, the first authentication request message includes the terminal device type information and/or the indication information, where the device type information indicates that the terminal device is the active terminal or the passive terminal, and the indication information indicates that the terminal device is the internet of things device. The second authentication request message includes at least one of the following: identification information, a group identifier, indication information, and device type information, where the group identifier is included in the identification information, and the group identifier indicates a service requester corresponding to the terminal device.

In a possible implementation, the interface unit 910 is configured to send first configuration information to a network repository device, where the first configuration information includes at least one of the following: a first support group identifier, first support information, and first support type information, where the first support group identifier corresponds to a first service requester, the authentication service device supports performing authorization and/or authentication on a terminal device corresponding to the first service requester, the first support information indicates whether the authentication service device supports authorization and/or authentication on the internet of things device, and the first support type information indicates a device type for which the authentication service device supports authorization and/or authentication.

In a possible implementation, the interface unit 910 is configured to send a fourth request message to a network repository device based on the first authentication request message, where the fourth request message is used to request to discover the unified data management device, and the fourth request message includes at least one of the following: a group identifier, indication information, and device type information, where the group identifier indicates the service requester corresponding to the terminal device, the indication information indicates that the terminal device is the internet of things device, and the device type information indicates that the terminal device is the active terminal or the passive terminal; the interface unit 910 is configured to obtain fourth response information from the network repository device, where the fourth response information includes identification information and/or address information of the unified data device; and the processing unit 920 is configured to select the unified data management device based on the fourth response information.

In a possible implementation, the fourth response information is determined based on the fourth request message and second configuration information of the unified data management device, where the second configuration information includes at least one of the following: a second support group identifier, second support information, and second support type information. The second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

In a possible implementation, the processing unit 920 is configured to select the unified data management device based on the first authentication information and fifth configuration information, where the fifth configuration information includes a correspondence between unified data management device information and at least one of the following: a second support group identifier, second support information, and second support type information, where the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

In a possible implementation, the interface unit 910 is configured to obtain a second authentication response message from the unified data management device, where the second authentication response message includes at least one of the following: identification information and/or address information of a network slice specific authentication and authorization function NSSAAF, and identification information and/or address information of an AAA server.

In a possible implementation, the interface unit 910 is configured to send a fifth request message to a network repository device, where the fifth request message is used to request to discover an NSSAAF, and the fifth request message includes at least one of the following: a group identifier, indication information, and device type information, where the group identifier is included in the identification information, the group identifier indicates a service requester corresponding to the terminal device, the indication information indicates that the terminal device is the internet of things device, and the device type information indicates that the terminal device is the active terminal or the passive terminal; the interface unit 910 is configured to obtain fifth response information from the network repository device, where the fifth response information includes at least one of the following: identification information and/or address information of the NSSAAF, and identification information and/or address information of an AAA server; and the processing unit 920 is configured to select the NSSAAF based on the fifth response information.

In a possible implementation, the fifth response information is determined based on the fifth request message and sixth configuration information of the NSSAAF, where the sixth configuration information includes at least one of the following: a third support group identifier, third support information, and third supported type information. The third support group identifier corresponds to a third service requester, the NSSAAF supports performing authorization and/or authentication on a terminal device corresponding to the third service requester, the third support information indicates whether the NSSAAF supports authorization and/or authentication on the internet of things device, and the third supported type information indicates a device type for which the NSSAAF supports authorization and/or authentication.

In a possible implementation, the first authentication request message includes network slice specific authentication and authorization function NSSAAF information and/or AAA server information, the NSSAAF information indicates an NSSAAF used to perform authorization and/or authentication; and the interface unit 910 is configured to send a third authentication request message to the NSSAAF, where the third authentication request message includes at least one of the following: a device identifier, indication information, device type information, and the AAA server information, where the indication information indicates that the terminal device is an internet of things device, the device type information indicates that the terminal device is an active terminal or a passive terminal, and the AAA server information includes identification information and/or address information of the AAA server.

The interface unit 910 in the communication apparatus 900 performs receiving and sending operations performed by the authentication service device in the foregoing method embodiments, and the processing unit 920 performs an operation other than the receiving and sending operations.

In a possible design, the apparatus 900 may correspond to the unified data management device in the foregoing embodiments.

In a possible embodiment, the apparatus 900 includes: an interface unit 910, configured to receive a second authentication request message from an authentication service device, where the second authentication request message includes at least one of following: identification information of a terminal device, a group identifier, indication information, and device type information, the group identifier is included in the identification information, the group identifier indicates a service requester corresponding to the terminal device, the indication information indicates that the terminal device is an internet of things device, and the device type information indicates that the terminal device is an active terminal or a passive terminal; and a processing unit 920, configured to determine an authentication method based on the second authentication request message, where the authentication method is used to perform authorization and/or authentication on the terminal device.

In a possible implementation, the interface unit 910 is configured to send second configuration information to a network repository device, where the second configuration information includes at least one of the following: a second support group identifier, second support information, and second support type information, where the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

In a possible implementation, the interface unit 910 is configured to receive a third request message from a mobility management device, where the third request message is used to select the authentication service device, and the third request message includes at least one of the following: identification information, a group identifier, indication information, and device type information, the group identifier is included in the identification information, the group identifier indicates the service requester corresponding to the terminal device, the indication information indicates that the terminal device is the internet of things device, and the device type information indicates that the terminal device is the active terminal or the passive terminal; the processing unit 920 is configured to select the authentication service device based on the third request information and fourth configuration information, where the fourth configuration information includes a correspondence between the authentication service device information and at least one of the following: a first support group identifier, first support information, and first support type information, the first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication; and the interface unit 910 is further configured to send third response information to the mobility management device, where the third response information includes identification information and/or address information of the authentication service device.

In a possible implementation, the interface unit 910 is configured to send a second authentication response message to the authentication service device, where the second authentication response message includes at least one of the following: identification information and/or address information of a network slice specific authentication and authorization function NSSAAF, and identification information and/or address information of an AAA server.

In a possible implementation, the interface unit 910 is configured to receive a registration request message from the mobility management device, where the registration request message includes identification information of the mobility management device and the identification information and/or the address information of the authentication service device, and the registration request message indicates the mobility management device and the authentication service device that serve the terminal device.

In a possible implementation, the apparatus 900 includes a storage unit 930, configured to store the identification information of the authentication service device.

The interface unit 910 in the communication apparatus 900 performs receiving and sending operations performed by the unified data management device in the foregoing method embodiments, and the processing unit 920 performs an operation other than the receiving and sending operations.

In a possible design, the apparatus 900 may correspond to the network exposure function device in the foregoing embodiments.

In a possible embodiment, the apparatus 900 includes an interface unit 910, configured to receive a service request message from a service requester, where the service request message is used to perform a service operation on at least one terminal device corresponding to the service requester; a network exposure function, configured to determine network function information based on the service request message, where a network function corresponding to the network function information is used to perform authorization and/or authentication on the at least one terminal device; and the interface unit 910 is further configured to send a service request message to a mobility management device, where the service request message includes network function information, and the network function information includes identification information and/or address information of at least one of the following network functions: an authentication service device, a unified data management device, a network slice specific authentication and authorization function NSSAAF, and an AAA server.

In a possible design, the apparatus 900 may correspond to the terminal device in the foregoing embodiments.

In a possible embodiment, the apparatus 900 includes an interface unit 910, configured to send a registration request message to a reader, where the terminal device accesses a network by using an internet of things access technology, the registration request message includes identification information and/or a device type of the terminal device, and the device type information indicates that the terminal device is an active terminal or a passive terminal.

In a possible design, the apparatus 900 may correspond to the reader/writer device in the foregoing embodiments.

In a possible embodiment, the apparatus 900 includes an interface unit 910, configured to receive a registration request message from a terminal device, where the terminal device accesses a network by using an internet of things access technology, the registration request message includes identification information and/or a device type of the terminal device, and the device type information indicates that the terminal device is an active terminal or a passive terminal; and the interface unit 910 is further configured to send a first message to a mobility management device, where the first message includes the identification information of the terminal device, the first message indicates the device type of the terminal device, the first message is used to determine an authentication service device, and the authentication service device supports authorization and/or authentication on a device that accesses the network by using the internet of things access technology.

In a possible design, the apparatus 900 may correspond to the network repository device in the foregoing embodiments.

In a possible embodiment, the apparatus 900 includes an interface unit 910, configured to receive first configuration information from an authentication service device, where the first configuration information includes at least one of the following: a first support group identifier, first support information, and first support type information, the first support group identifier corresponds to a first service requester, the authentication service device supports authorization and/or authentication on a terminal device corresponding to the first service requester, the first support information indicates whether authorization and/or authentication on the internet of things device is supported, and the first support type information indicates a device type for which the authentication service device supports authorization and/or authentication; the interface unit 910 is further configured to receive a first request message from a mobility management device, where the first request message includes at least one of the following: a group identifier, indication information, and device type information, where the group identifier indicates a service requester corresponding to the terminal device, the indication information indicates that the terminal device is the internet of things device, and the device type information indicates that the terminal device is an active terminal or a passive terminal; the processing unit 920 is configured to discover the authentication service device based on the first request message and the first configuration information; and the interface unit 910 is configured to send first response information to the mobility management device, where the first response information includes identification information and/or address information of the authentication service device.

In a possible implementation, the interface unit 910 is configured to receive second configuration information from a unified data management device, where the second configuration information includes at least one of the following: a second support group identifier, second support information, and second support type information, the second support group identifier corresponds to a second service requester, the unified data management device supports management of subscription data of a terminal device corresponding to the second service requester, the second support information indicates whether the unified data management device supports management of subscription of data of the internet of things device, and the second support type information indicates a device type corresponding to the terminal device that is supported by the unified data management device and that manages the subscription data; the interface unit 910 is further configured to receive a second request message from a mobility management device, where the second request message includes at least one of the following: a group identifier, indication information, and device type information, where the group identifier indicates a service requester corresponding to the terminal device, the indication information indicates that the terminal device is an internet of things device, and the device type information indicates that the terminal device is the active terminal or the passive terminal; the processing unit 920 is configured to discover the authentication service device based on the second request message and the second configuration information; and the interface unit 910 is configured to send second response information to the mobility management device, where the second response information includes the identification information and/or the address information of the unified data management device.

In a possible implementation, the interface unit 910 is configured to receive second configuration information from a unified data management device, where the second configuration information includes at least one of the following: a second support group identifier, second support information, and second support type information, the second support group identifier corresponds to a second service requester, the unified data management device supports management of subscription data of a terminal device corresponding to the second service requester, the second support information indicates whether the unified data management device supports management of subscription of data of the internet of things device, and the second support type information indicates a device type corresponding to the terminal device that is supported by the unified data management device and that manages the subscription data; the interface unit 910 is further configured to receive a second request message from a mobility management device, where the second request message includes at least one of the following: a group identifier, indication information, and device type information, where the group identifier indicates a service requester corresponding to the terminal device, the indication information indicates that the terminal device is an internet of things device, and the device type information indicates that the terminal device is the active terminal or the passive terminal; the processing unit 920 is configured to discover the authentication service device based on the second request message and the second configuration information; and the interface unit 910 is configured to send second response information to the mobility management device, where the second response information includes the identification information and/or the address information of the unified data management device.

In a possible implementation, the interface unit 910 is configured to receive a fourth request message from the authentication service device, where the fourth request message includes at least one of the following: a group identifier, indication information, and device type information, where the group identifier indicates a service requester corresponding to the terminal device, the indication information indicates that the terminal device is the internet of things device, and the device type information indicates that the terminal device is the active terminal or the passive terminal; the processing unit 920 is configured to discover the authentication service device based on the fourth request message and the second configuration information; and the interface unit 910 is configured to send fourth response information to the authentication service device, where the fourth response information includes the identification information and/or the address information of the unified data management device.

In a possible implementation, the interface unit 910 is configured to receive sixth configuration information from a network slice specific authentication and authorization function NSSAAF, where the sixth configuration information includes at least one of the following: a third support group identifier, third support information, and third support type information, where the third support group identifier indicates a service requester supported by the NSSAAF, the third support information corresponds to a third service requester, the NSSAAF supports performing authorization and/or authentication on a terminal device corresponding to the third service requester, and the third support type information indicates a device type for which the NSSAAF supports authorization and/or authentication; the interface unit 910 is further configured to receive a fifth request message from the authentication service device, where the fifth request message includes at least one of the following: a group identifier, indication information, and device type information, where the group identifier indicates a service requester corresponding to the terminal device, the indication information indicates that the terminal device is an internet of things device, and the device type information indicates that the terminal device is the active terminal or the passive terminal; the processing unit 920 is configured to discover the authentication service device based on the fifth request message and the sixth configuration information; and the interface unit 910 is configured to send fifth response information to the authentication service device, where the fifth response information includes identification information and/or address information of the NSSAAF and/or identification information and/or address information of the AAA server.

The interface unit 910 in the communication apparatus 900 performs receiving and sending operations performed by the network repository device in the foregoing method embodiments, and the processing unit 920 performs an operation other than the receiving and sending operations.

According to the foregoing method, FIG. 13 is a diagram of a communication apparatus 1000 according to an embodiment of this application.

The apparatus 1000 may include a processor 1010 (that is, an example of a processing unit). In a possible implementation, the apparatus 1000 further includes a memory 1020. The memory 1020 is configured to store instructions, and the processor 1010 is configured to execute the instructions stored in the memory 1020, so that the apparatus 1000 implements the steps performed by the communication apparatus in the method 500 to the method 800.

In a possible implementation, the apparatus 1000 may further include an interface 1030 (that is, an example of an interface unit module). Further, the processor 1010, the memory 1020, and the interface 1030 may communicate with each other through an internal connection path, to transfer a control and/or data signal. The memory 1020 is configured to store a computer program, and the processor 1010 may be configured to invoke the computer program from the memory 1020 and run the computer program, to control the interface 1030 to receive or send a signal. The memory 1020 may be integrated into the processor 1010, or may be separated from the processor 1010.

In a possible implementation, if the communication apparatus 1000 is a communication device, the interface 1030 is a receiver or a transmitter. The receiver and the transmitter may be same physical entities or different physical entities. When the receiver and the transmitter are a same physical entity, the receiver and the transmitter may be collectively referred to as a transceiver.

In a possible implementation, if the communication apparatus 1000 is a chip or a circuit, the interface 1030 is an input interface or the interface 1030 is an output interface.

In an implementation, a function of the interface 1030 may be implemented by using a transceiver circuit or a dedicated transceiver chip. It may be considered that the processor 1010 is implemented through a dedicated processing chip, a processing circuit, a processor or a general-purpose chip.

In another implementation, it may be considered that the communication apparatus provided in this embodiment of this application is implemented by using a general-purpose computer. To be specific, program code for implementing functions of the processor 1010 and the interface 1030 is stored in the memory 1020, and a general-purpose processor executes the code in the memory 1020 to implement the functions of the processor 1010 and the interface 1030.

For concepts, explanations, detailed descriptions, and other steps of the apparatus 1000 that are related to the technical solutions provided in the embodiments of this application, refer to the descriptions of the content in the foregoing methods or other embodiments. Details are not described herein again.

An embodiment of this application further provides a computer-readable storage medium. The computer-readable storage medium stores computer instructions used to implement the methods performed by various devices in the foregoing method embodiments.

For example, when the computer program is executed by a computer, the computer is enabled to implement the methods performed by the various devices in the foregoing method embodiments.

An embodiment of this application further provides a computer program product including instructions. When the instructions are executed by a computer, the computer is enabled to implement the methods performed by the various devices in the foregoing method embodiments.

An embodiment of this application further provides a communication system. The communication system includes various devices in the foregoing embodiments.

For explanations and beneficial effects of related content in any one of the apparatuses provided above, refer to the corresponding method embodiment provided above. Details are not described herein again.

It should be understood that, the processor in embodiments of this application may be a central processing unit (central processing unit, CPU), or may be another general purpose processor, a digital signal processor (digital signal processor, DSP), an application-specific integrated circuit (application specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (digital versatile disc, DVD)), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit. When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes: any medium that can store program code, such as a USB flash disk, a removable hard disk, a read-only memory, a random access memory, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining, by a mobility management device, a first message, wherein the first message comprises identification information of a terminal device, the first message indicates a device type of the terminal device, and the terminal device accesses a network by using an internet of things access technology;
selecting, by the mobility management device, an authentication service device based on the first message, wherein the authentication service device supports authorization and/or authentication on the terminal device that accesses the network by using the internet of things access technology; and
sending, by the mobility management device, a first authentication request message to the authentication service device, wherein the first authentication request message comprises the identification information of the terminal device, and the first authentication request message is used to request to perform authorization and/or authentication on the terminal device.

2. The method according to claim 1, wherein the first message comprises device type information and/or indication information, the device type information indicates that the terminal device is an active terminal or a passive terminal, the indication information indicates that the terminal device is an internet of things device, and the selecting, by the mobility management device, the authentication service device based on the first message comprises:
determining, by the mobility management device based on the first message, that the terminal device is an internet of things device, and selecting the authentication service device that supports authorization and/or authentication on the internet of things device.

3. The method according to claim 1 or 2, wherein selecting the authentication service device based on the first message comprises:
sending, by the mobility management device, a first request message to a network repository device based on the first message, wherein the first request message is used to request to discover the authentication service device, and the first request message comprises at least one of the following: a group identifier, the indication information, and the device type information, wherein
the group identifier indicates a service requester corresponding to the terminal device, the indication information indicates that the terminal device is the internet of things device, and the device type information indicates that the terminal device is the active terminal or the passive terminal;
obtaining, by the mobility management device, first response information from the network repository device, wherein the first response information comprises identification information and/or address information of the authentication service device; and
selecting, by the mobility management device, the authentication service device based on the first response information.

4. The method according to any one of claims 1 to 3, wherein the method further comprises:
sending, by the mobility management device, a second request message to a network repository device, wherein the second request message is used to request to discover a unified data management device, and the second request message comprises at least one of the following: identification information, a group identifier, indication information, and device type information, wherein
the group identifier is comprised in the identification information, the group identifier indicates a service requester corresponding to the terminal device, the indication information indicates that the terminal device is the internet of things device, and the device type information indicates that the terminal device is the active terminal or the passive terminal;
obtaining, by the mobility management device, second response information from the network repository device, wherein the second response information comprises identification information and/or address information of the unified data management device; and
selecting, by the mobility management device, the unified data management device based on the second response information.

5. The method according to claim 1 or 2, wherein selecting the authentication service device based on the first message comprises:
selecting, by the mobility management device, the authentication service device based on the first message and third configuration information, wherein the third configuration information comprises a correspondence between authentication service device information and at least one of the following: a first support group identifier, first support information, and first support type information, wherein
the authentication service device information comprises an identifier and/or address information of the authentication service device, the first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication.

6. The method according to claim 1 or 2, wherein selecting the authentication service device based on the first message comprises:
sending, by the mobility management device, a third request message to a unified data management device, wherein the third request message is used to select the authentication service device, and the third request message comprises at least one of the following: identification information, a group identifier, indication information, and device type information, wherein
the group identifier is comprised in the identification information, the group identifier indicates a service requester corresponding to the terminal device, the indication information indicates that the terminal device is the internet of things device, and the device type information indicates that the terminal device is the active terminal or the passive terminal;
obtaining, by the mobility management device, third response information from the unified data management device, wherein the third response information comprises identification information and/or address information of the authentication service device; and
selecting, by the mobility management device, the authentication service device based on the third response information.

7. The method according to claim 5 or 6, wherein the method further comprises:
selecting, by the mobility management device, the unified data management device based on the first message and the third configuration information, wherein the third configuration information comprises a correspondence between unified data management device information and at least one of the following: a second support group identifier, second support information, and second support type information, the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

8. The method according to claim 4 or 7, wherein the method further comprises:
sending, by the mobility management device, a registration request message to the unified data management device, wherein the registration request message comprises identification information of the mobility management device and the identification information and/or the address information of the authentication service device, and the registration request message indicates the mobility management device and the authentication service device that serve the terminal device.

9. The method according to any one of claims 4 to 8, wherein the method further comprises: storing, by the mobility management device, the identification information of the authentication service device and/or the identification information of the unified data management device.

10. The method according to claim 1 or 2, wherein selecting the authentication service device based on the first message comprises:
obtaining, by the mobility management device, a sixth request message from a network exposure function, wherein the sixth request message comprises network function information, and the network function information comprises identification information and/or address information of at least one of the following devices: the authentication service device, a unified data management device, a network slice specific authentication and authorization function NSAAF, and an AAA server; and
selecting, by the mobility management device, the authentication service device and/or the unified data management device based on the first message and the sixth request message.

11. A communication method, comprising:
receiving, by an authentication service device, a first authentication request message from a mobility management device, wherein the first authentication request message comprises identification information of a terminal device, the first authentication request message is used to request to perform authorization and/or authentication on the terminal device, and the terminal device accesses a network by using an internet of things access technology.

12. The method according to claim 11, wherein the first authentication request message comprises device type information and/or indication information, the device type information indicates that the terminal device is an active terminal or a passive terminal, the indication information indicates that the terminal device is an internet of things device, and the method further comprises:
selecting, by the authentication service device, the terminal device as the internet of things device based on the first authentication request message.

13. The method according to claim 11 or 12, wherein the method comprises:
selecting, by the authentication service device, a unified data management device based on the first authentication request message, wherein the unified data management device supports authorization and/or authentication on a device that accesses the network by using the internet of things access technology; and
sending, by the authentication service device, a second authentication request message to the unified data management device, wherein the second authentication request message is used to determine an authentication method, and the authentication method is used to perform authorization and/or authentication on the terminal device.

14. The method according to claim 13, wherein the second authentication request message comprises at least one of the following: the identification information of the terminal device, a group identifier, the indication information, and the device type information, the group identifier is comprised in the identification information, the group identifier indicates a service requester corresponding to the terminal device, the indication information indicates that the terminal device is the internet of things device, and the device type information indicates that the terminal device is the active terminal or the passive terminal.

15. The method according to any one of claims 11 to 14, wherein the method further comprises:
sending, by the authentication service device, first configuration information to a network repository device, wherein the first configuration information comprises at least one of the following: a first support group identifier, first support information, and first support type information, wherein
the first support group identifier corresponds to a first service requester, the authentication service device supports performing authorization and/or authentication on a terminal device corresponding to the first service requester, the first support information indicates whether the authentication service device supports authorization and/or authentication on the internet of things device, and the first support type information indicates a device type for which the authentication service device supports authorization and/or authentication.

16. The method according to any one of claims 13 to 15, wherein selecting, by the authentication service device, the unified data management device based on the first authentication request message comprises:
sending, by the authentication service device, a fourth request message to a network repository device based on the first authentication request message, wherein the fourth request message is used to request to discover the unified data management device, and the fourth request message comprises at least one of the following: a group identifier, indication information, and device type information, wherein
the group identifier indicates the service requester corresponding to the terminal device, the indication information indicates that the terminal device is the internet of things device, and the device type information indicates that the terminal device is the active terminal or the passive terminal;
obtaining, by the authentication service device, fourth response information from the network repository device, wherein the fourth response information comprises identification information and/or address information of the unified data device; and
selecting, by the authentication service device, the unified data management device based on the fourth response information.

17. The method according to any one of claims 13 to 15, wherein selecting, by the authentication service device, the unified data management device based on the first authentication request message comprises:
selecting, by the authentication service device, the unified data management device based on the first authentication information and fifth configuration information, wherein the fifth configuration information comprises a correspondence between unified data management device information and at least one of the following: a second support group identifier, second support information, and second support type information, wherein
the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

18. The method according to claim 17, wherein the method further comprises:
obtaining, by the authentication service device, a second authentication response message from the unified data management device, wherein the second authentication response message comprises at least one of the following: identification information and/or address information of a network slice specific authentication and authorization function NSSAAF, and identification information and/or address information of an AAA server.

19. The method according to claim 11, wherein the method further comprises:
sending, by the authentication service device, a fifth request message to a network repository device, wherein the fifth request message is used to request to discover an NSSAAF, and the fifth request message comprises at least one of the following: a group identifier, indication information, and device type information, wherein
the group identifier is comprised in the identification information, the group identifier indicates a service requester corresponding to the terminal device, the indication information indicates that the terminal device is the internet of things device, and the device type information indicates that the terminal device is the active terminal or the passive terminal;
obtaining, by the authentication service device, fifth response information from the network repository device, wherein the fifth response information comprises at least one of the following: identification information and/or address information of the NSSAAF, and identification information and/or address information of an AAA server; and
selecting, by the authentication service device, the NSSAAF based on the fifth response information.

20. The method according to claim 11, wherein the first authentication request message comprises network slice specific authentication and authorization function NSSAAF information and/or AAA server information, the NSSAAF information indicates an NSSAAF used to perform authorization and/or authentication, and the method comprises:
sending, by the authentication service device, a third authentication request message to the NSSAAF, wherein the third authentication request message comprises at least one of the following: a device identifier, indication information, device type information, and the AAA server information, wherein
the indication information indicates that the terminal device is an internet of things device, the device type information indicates that the terminal device is an active terminal or a passive terminal, and the AAA server information comprises identification information and/or address information of the AAA server.

21. A communication method, comprising:
receiving, by a unified data management device, a second authentication request message from an authentication service device, wherein the second authentication request message comprises at least one of following: identification information of a terminal device, a group identifier, indication information, and device type information, the group identifier is comprised in the identification information, the group identifier indicates a service requester corresponding to the terminal device, the indication information indicates that the terminal device is an internet of things device, and the device type information indicates that the terminal device is an active terminal or a passive terminal; and
determining, by the unified data management device, an authentication method based on the second authentication request message, wherein the authentication method is used to perform authorization and/or authentication on the terminal device.

22. The method according to claim 21, wherein the method further comprises: sending, by the unified data management device, second configuration information to a network repository device, wherein the second configuration information comprises at least one of the following: a second support group identifier, second support information, and second support type information, wherein
the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

23. The method according to claim 21 or 22, wherein the method further comprises:
receiving, by the unified data management device, a third request message from a mobility management device, wherein the third request message is used to select the authentication service device, and the third request message comprises at least one of the following: identification information, a group identifier, indication information, and device type information, the group identifier is comprised in the identification information, the group identifier indicates the service requester corresponding to the terminal device, the indication information indicates that the terminal device is the internet of things device, and the device type information indicates that the terminal device is the active terminal or the passive terminal;
selecting, by the unified data management device, the authentication service device based on the third request information and fourth configuration information, wherein the fourth configuration information comprises a correspondence between the authentication service device information and at least one of the following: a first support group identifier, first support information, and first support type information, the first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type that supports authorization and/or authentication; and
sending, by the unified data management device, third response information to the mobility management device, wherein the third response information comprises identification information and/or address information of the authentication service device.

24. The method according to claim 21 or 22, wherein the method further comprises:
sending, by the unified data management device, a second authentication response message to the authentication service device, wherein the second authentication response message comprises at least one of the following: identification information and/or address information of a network slice specific authentication and authorization function NSSAAF, and identification information and/or address information of an AAA server.

25. The method according to any one of claims 21 to 24, wherein the method further comprises:
receiving, by the unified data management device, a registration request message from the mobility management device, wherein the registration request message comprises identification information of the mobility management device and the identification information and/or the address information of the authentication service device, and the registration request message indicates the mobility management device and the authentication service device that serve the terminal device.

26. The method according to claim 25, wherein the method further comprises: storing, by the unified data management device, the identification information of the authentication service device.

27. A communication method, comprising:
receiving, by a network exposure function, a service request message from a service requester, wherein the service request message is used to perform a service operation on at least one terminal device corresponding to the service requester;
determining, by the network exposure function, network function information based on the service request message, wherein a network function corresponding to the network function information is used to perform authorization and/or authentication on the at least one terminal device; and
sending, by the network exposure function, a sixth request message to a mobility management device, wherein the sixth request message comprises the network function information, and the network function information comprises identification information and/or address information of at least one of the following network functions: an authentication service device, a unified data management device, a network slice specific authentication and authorization function NSSAAF, and an AAA server.

28. A communication apparatus, wherein the apparatus comprises:
an interface unit, configured to obtain a first message, wherein the first message comprises identification information of a terminal device, the first message indicates a device type of the terminal device, and the terminal device accesses a network by using an internet of things access technology;
a processing unit, configured to select an authentication service device based on the first message, wherein the authentication service device supports authorization and/or authentication on the terminal device that accesses the network by using the internet of things access technology; and
the interface unit is further configured to send a first authentication request message to the authentication service device, wherein the first authentication request message comprises the identification information of the terminal device, and the first authentication request message is used to request to perform authorization and/or authentication on the terminal device.

29. The apparatus according to claim 28, wherein the first message comprises device type information and/or indication information, the device type information indicates that the terminal device is an active terminal or a passive terminal, the indication information indicates that the terminal device is an internet of things device, and that the processing unit is configured to select the authentication service device based on the first message comprises:
the processing unit is configured to: determine, based on the first message, that the terminal device is an internet of things device, and select the authentication service device that supports authorization and/or authentication on the internet of things device.

30. The apparatus according to claim 28 or 29, wherein that the processing unit selects the authentication service device based on the first message comprises:
the interface unit is configured to send a first request message to a network repository device based on the first message, wherein the first request message is used to request to discover the authentication service device, and the first request message comprises at least one of the following: a group identifier, the indication information, and the device type information, wherein
the group identifier indicates a service requester corresponding to the terminal device, the indication information indicates that the terminal device is the internet of things device, and the device type information indicates that the terminal device is the active terminal or the passive terminal;
the interface unit is further configured to obtain first response information from the network repository device, wherein the first response information comprises identification information and/or address information of the authentication service device; and
the processing unit is configured to select the authentication service device based on the first response information.

31. The apparatus according to any one of claims 28 to 30, wherein
the interface unit is further configured to send a second request message to a network repository device, wherein the second request message is used to request to discover a unified data management device, and the second request message comprises at least one of the following: identification information, a group identifier, indication information, and device type information, wherein
the group identifier is comprised in the identification information, the group identifier indicates a service requester corresponding to the terminal device, the indication information indicates that the terminal device is the internet of things device, and the device type information indicates that the terminal device is the active terminal or the passive terminal;
the interface unit is further configured to obtain second response information from the network repository device, wherein the second response information comprises identification information and/or address information of the unified data management device; and
the processing unit is further configured to select the unified data management device based on the second response information.

32. The apparatus according to claim 28 or 29, wherein that the processing unit is configured to select the authentication service device based on the first message comprises:
the processing unit is configured to select the authentication service device based on the first message and third configuration information, wherein the third configuration information comprises a correspondence between authentication service device information and at least one of the following: a first support group identifier, first support information, and first support type information, wherein
the authentication service device information comprises an identifier and/or address information of the authentication service device, the first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type for which the authentication service device supports authorization and/or authentication.

33. The apparatus according to claim 28 or 29, wherein that the processing unit is configured to select the authentication service device based on the first message comprises:
the interface unit is configured to send a third request message to a unified data management device, wherein the third request message is used to select the authentication service device, and the third request message comprises at least one of the following: identification information, a group identifier, indication information, and device type information, wherein
the group identifier is comprised in the identification information, the group identifier indicates a service requester corresponding to the terminal device, the indication information indicates that the terminal device is the internet of things device, and the device type information indicates that the terminal device is the active terminal or the passive terminal;
the interface unit is further configured to obtain third response information from the unified data management device, wherein the third response information comprises identification information and/or address information of the authentication service device; and
the processing unit is configured to select the authentication service device based on the third response information.

34. The apparatus according to claim 32 or 33, wherein
the processing unit is configured to select the unified data management device based on the first message and the third configuration information, wherein the third configuration information comprises a correspondence between unified data management device information and at least one of the following: a second support group identifier, second support information, and second support type information, the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

35. The apparatus according to claim 31 or 34, wherein
the interface unit is configured to send a registration request message to the unified data management device, wherein the registration request message comprises identification information of the mobility management device and the identification information and/or the address information of the authentication service device, and the registration request message indicates the mobility management device and the authentication service device that serve the terminal device.

36. The apparatus according to any one of claims 31 to 35, wherein the apparatus further comprises a storage unit, configured to store the identification information of the authentication service device and/or the identification information of the unified data management device.

37. The apparatus according to claim 28 or 29, wherein that the processing unit is configured to select the authentication service device based on the first message comprises:
the interface unit is configured to obtain a sixth request message from a network exposure function, wherein the sixth request message comprises network function information, and the network function information comprises identification information and/or address information of at least one of the following devices: the authentication service device, a unified data management device, a network slice specific authentication and authorization function NSAAF, and an AAA server; and
the processing unit is configured to select the authentication service device and/or the unified data management device based on the first message and the sixth request message.

38. A communication apparatus, wherein the apparatus comprises:
an interface unit, configured to receive a first authentication request message from a mobility management device, wherein the first authentication request message comprises identification information of a terminal device, the first authentication request message is used to request to perform authorization and/or authentication on the terminal device, and the terminal device accesses a network by using an internet of things access technology.

39. The apparatus according to claim 38, wherein the first authentication request message comprises device type information and/or indication information, the device type information indicates that the terminal device is an active terminal or a passive terminal, the indication information indicates that the terminal device is an internet of things device, and the apparatus further comprises:
a processing unit, configured to select the terminal device as the internet of things device based on the first authentication request message.

40. The apparatus according to claim 38 or 39, wherein
the processing unit is configured to select a unified data management device based on the first authentication request message, wherein the unified data management device supports authorization and/or authentication on a device that accesses the network by using the internet of things access technology; and
the interface unit is configured to send a second authentication request message to the unified data management device, wherein the second authentication request message is used to determine an authentication method, and the authentication method is used to perform authorization and/or authentication on the terminal device.

41. The apparatus according to claim 40, wherein the second authentication request message comprises at least one of the following: the identification information of the terminal device, a group identifier, the indication information, and the device type information, the group identifier is comprised in the identification information, the group identifier indicates a service requester corresponding to the terminal device, the indication information indicates that the terminal device is the internet of things device, and the device type information indicates that the terminal device is the active terminal or the passive terminal.

42. The apparatus according to any one of claims 38 to 41, wherein
the interface unit is configured to send first configuration information to a network repository device, wherein the first configuration information comprises at least one of the following: a first support group identifier, first support information, and first support type information, wherein
the first support group identifier corresponds to a first service requester, the authentication service device supports performing authorization and/or authentication on a terminal device corresponding to the first service requester, the first support information indicates whether the authentication service device supports authorization and/or authentication on the internet of things device, and the first support type information indicates a device type for which the authentication service device supports authorization and/or authentication.

43. The apparatus according to any one of claims 40 to 42, wherein that the processing unit is configured to select the unified data management device based on the first authentication request message comprises:
the interface unit is configured to send a fourth request message to a network repository device based on the first authentication request message, wherein the fourth request message is used to request to discover the unified data management device, and the fourth request message comprises at least one of the following: a group identifier, indication information, and device type information, wherein
the group identifier indicates the service requester corresponding to the terminal device, the indication information indicates that the terminal device is the internet of things device, and the device type information indicates that the terminal device is the active terminal or the passive terminal;
the interface unit is configured to obtain fourth response information from the network repository device, wherein the fourth response information comprises identification information and/or address information of the unified data device; and
the processing unit is configured to select the unified data management device based on the fourth response information.

44. The apparatus according to any one of claims 40 to 42, wherein that the processing unit is configured to select the unified data management device based on the first authentication request message comprises:
the processing unit is configured to select the unified data management device based on the first authentication information and fifth configuration information, wherein the fifth configuration information comprises a correspondence between unified data management device information and at least one of the following: a second support group identifier, second support information, and second support type information, wherein
the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

45. The apparatus according to claim 44, wherein
the interface unit is configured to obtain a second authentication response message from the unified data management device, wherein the second authentication response message comprises at least one of the following: identification information and/or address information of a network slice specific authentication and authorization function NSSAAF, and identification information and/or address information of an AAA server.

46. The apparatus according to claim 38, wherein
the interface unit is configured to send a fifth request message to a network repository device, wherein the fifth request message is used to request to discover an NSSAAF, and the fifth request message comprises at least one of the following: a group identifier, indication information, and device type information, wherein
the group identifier is comprised in the identification information, the group identifier indicates a service requester corresponding to the terminal device, the indication information indicates that the terminal device is the internet of things device, and the device type information indicates that the terminal device is the active terminal or the passive terminal;
the interface unit is configured to obtain fifth response information from the network repository device, wherein the fifth response information comprises at least one of the following: identification information and/or address information of the NSSAAF, and identification information and/or address information of an AAA server; and
the processing unit is configured to select the NSSAAF based on the fifth response information.

47. The apparatus according to claim 38, wherein the first authentication request message comprises network slice specific authentication and authorization function NSSAAF information and/or AAA server information, the NSSAAF information indicates an NSSAAF used to perform authorization and/or authentication; and
the interface unit is configured to send a third authentication request message to the NSSAAF, wherein the third authentication request message comprises at least one of the following: a device identifier, indication information, device type information, and the AAA server information, wherein
the indication information indicates that the terminal device is an internet of things device, the device type information indicates that the terminal device is an active terminal or a passive terminal, and the AAA server information comprises identification information and/or address information of the AAA server.

48. A communication apparatus, wherein the apparatus comprises:
an interface unit, configured to receive a second authentication request message from an authentication service device, wherein the second authentication request message comprises at least one of following: identification information of a terminal device, a group identifier, indication information, and device type information, the group identifier is comprised in the identification information, the group identifier indicates a service requester corresponding to the terminal device, the indication information indicates that the terminal device is an internet of things device, and the device type information indicates that the terminal device is an active terminal or a passive terminal; and
a processing unit, configured to determine an authentication method based on the second authentication request message, wherein the authentication method is used to perform authorization and/or authentication on the terminal device.

49. The apparatus according to claim 48, wherein the interface unit is configured to send second configuration information to a network repository device, wherein the second configuration information comprises at least one of the following: a second support group identifier, second support information, and second support type information, wherein
the second support group identifier corresponds to a second service requester, the unified data management device supports management of subscription data of a terminal device corresponding to the second service requester, the second support information indicates whether the unified data management device supports management of subscription data of the internet of things device, and the second support type information indicates a device type corresponding to the terminal device that is supported by the unified data management device and that manages the subscription data.

50. The apparatus according to claim 48 or 49, wherein
the interface unit is configured to receive a third request message from a mobility management device, wherein the third request message is used to select the authentication service device, and the third request message comprises at least one of the following: identification information, a group identifier, indication information, and device type information, the group identifier is comprised in the identification information, the group identifier indicates the service requester corresponding to the terminal device, the indication information indicates that the terminal device is the internet of things device, and the device type information indicates that the terminal device is the active terminal or the passive terminal;
the processing unit is configured to select the authentication service device based on the third request information and fourth configuration information, wherein the fourth configuration information comprises a correspondence between the authentication service device information and at least one of the following: a first support group identifier, first support information, and first support type information, the first support group identifier corresponds to a first service requester, the authentication service device supports performing authorization and/or authentication on a terminal device corresponding to the first service requester, the first support information indicates whether authorization and/or authentication on the internet of things device is supported, and the first support type information indicates a device type that supports authorization and/or authentication; and
the interface unit is further configured to send third response information to the mobility management device, wherein the third response information comprises identification information and/or address information of the authentication service device.

51. The apparatus according to claim 48 or 49, wherein
the interface unit is configured to send a second authentication response message to the authentication service device, wherein the second authentication response message comprises at least one of the following: identification information and/or address information of a network slice specific authentication and authorization function NSSAAF, and identification information and/or address information of an AAA server.

52. The apparatus according to any one of claims 48 to 51, wherein
the interface unit is configured to receive a registration request message from the mobility management device, wherein the registration request message comprises identification information of the mobility management device and the identification information and/or the address information of the authentication service device, and the registration request message indicates the mobility management device and the authentication service device that serve the terminal device.

53. The apparatus according to claim 52, wherein the apparatus further comprises a storage unit, configured to store the identification information of the authentication service device.

54. A communication apparatus, wherein the apparatus comprises:
an interface unit, configured to receive a service request message from a service requester, wherein the service request message is used to perform a service operation on at least one terminal device corresponding to the service requester;
a processing unit, configured to determine network function information based on the service request message, wherein a network function corresponding to the network function information is used to perform authorization and/or authentication on the at least one terminal device; and
the interface unit is further configured to send a sixth request message to a mobility management device, wherein the sixth request message comprises the network function information, and the network function information comprises identification information and/or address information of at least one of the following network functions: an authentication service device, a unified data management device, a network slice specific authentication and authorization function NSSAAF, and an AAA server.

55. A communication apparatus, comprising:
a processor, wherein the processor is configured to execute a program or instructions, so that the apparatus performs the method according to any one of claims 1 to 10, or so that the apparatus performs the method according to any one of claims 11 to 20, or so that the apparatus performs the method according to any one of claims 21 to 26, or so that the apparatus performs the method according to claim 27.

56. A computer-readable storage medium, wherein the computer-readable storage medium stores a computer program, and when the computer program is run on a computer, the computer is enabled to perform the method according to any one of claims 1 to 10, the method according to any one of claims 11 to 20, the method according to any one of claims 21 to 26, or the method according to claim 27.
